(19) 
Europäisches Patentamt
European Patent Office
Office européen des brevets

(11) **EP 4 665 046 A1**

(12) **EUROPEAN PATENT APPLICATION**
published in accordance with Art. 153(4) EPC

(43) Date of publication:
**17.12.2025   Bulletin 2025/51**

(21) Application number: **24753260.9**

(22) Date of filing: **02.02.2024**

(51) International Patent Classification (IPC):
**H04W 72/115** (2023.01)    **H04W 56/00** (2009.01)
**H04W 72/0446** (2023.01)

(52) Cooperative Patent Classification (CPC):
**H04W 56/00; H04W 72/0446; H04W 72/115;**
**H04W 72/1268; H04W 72/23**

(86) International application number:
**PCT/JP2024/003491**

(87) International publication number:
**WO 2024/166817 (15.08.2024 Gazette 2024/33)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **09.02.2023   JP 2023018721**

(71) Applicant: **Sony Group Corporation**
**Tokyo 108-0075 (JP)**

(72) Inventor: **TSUDA, Shinichiro**
**Tokyo 108-0075 (JP)**

(74) Representative: **Witte, Weller & Partner**
**Patentanwälte mbB**
**Postfach 10 54 62**
**70047 Stuttgart (DE)**

(54) **BASE STATION, TERMINAL DEVICE, AND COMMUNICATION METHOD**

(57)    A base station according to the present disclosure includes a control unit. The control unit determines assignment information for a radio resource regarding received data that is periodically received. The control unit transmits the assignment information to a terminal device. The received data is specified by an arrival time, a periodicity, and a protected window of a data burst. The assignment information for the radio resource is determined on the basis of at least one of the arrival time, the periodicity, and the protected window.

FIG.11

**Description**

Field

The present disclosure relates to a base station, a terminal device, and a communication method.

Background

The first standard of a fifth generation mobile communication system, so-called 5G, was formulated in 2018 as Rel-15. In addition, a service corresponding to 5G was started in Japan in March 2020. The fifth generation mobile communication system has features of enhanced mobile broadband (eMBB), ultra-reliable and low latency communications (URLLC), and massive machine type communication (mMTC).

In addition, in 5G, coping with a concept called a network slice has been performed such that various traffics having largely different demands for communication depending on a use can be efficiently processed.

Citation List

Patent Literature

Patent Literature 1: JP 2021-170790 A

Summary

Technical Problem

Time Sensitive Network (TSN)/Time Sensitive Communication (TSC) has been supported in 5G. As a result, it is expected that an apparatus and a robot in a factory will be controlled, and various contents for extended reality (XR) or 3D hologram display will be distributed via 5G.

A control signal of the apparatus and a traffic pattern of the contents of XR are scheduled/deterministic and occur in a burst manner.

In this manner, wireless communication capable of stably transmitting data (data burst) that occurs in a burst manner with a low delay is required.

Therefore, the present disclosure provides a mechanism capable of stably transmitting a data burst with a low delay.

Note that the above problem or object is merely one of a plurality of problems or objects that can be solved or achieved by a plurality of embodiments disclosed in the present specification.

Solution to Problem

A base station according to the present disclosure includes a control unit. The control unit determines assignment information for a radio resource regarding received data that is periodically received. The control unit transmits the assignment information to a terminal device. The received data is specified by an arrival time, a periodicity, and a protected window of a data burst. The assignment information for the radio resource is determined on the basis of at least one of the arrival time, the periodicity, and the protected window.

Brief Description of Drawings

FIG. 1 is a diagram illustrating a schematic configuration example of a communication system according to an embodiment of the present disclosure.

FIG. 2 is a block diagram illustrating a configuration example of an information processing device according to the embodiment of the present disclosure.

FIG. 3 is a diagram illustrating a configuration example of a base station according to the embodiment of the present disclosure.

FIG. 4 is a block diagram illustrating a configuration example of a terminal device according to the embodiment of the present disclosure.

FIG. 5 is a diagram illustrating an outline of TSN.

FIG. 6 is a diagram illustrating an example of a configuration of 5GS modeled as a PTP instance.

FIG. 7 is a diagram illustrating an example of a configuration of a 5GS bridge.

FIG. 8 is a diagram illustrating an example of a QoS architecture of 5GS.

FIG. 9 is a diagram illustrating an example of a configuration of each queue for each time slot to be subjected to gate control.

FIG. 10 is a diagram illustrating an example of a configuration of a time slot that controls availability of communication.

FIG. 11 is a diagram illustrating an example (downlink) of transmission of a scheduled data burst DB in 5GS according to the embodiment of the present disclosure.

FIG. 12 is a diagram illustrating an example (downlink) of the transmission of the scheduled data burst DB in 5GS according to the embodiment of the present disclosure.

FIG. 13 is a diagram illustrating a correspondence between a configuration of a PDU set according to the embodiment of the present disclosure and the data burst DB.

FIG. 14 is a diagram illustrating a correspondence between a configuration of the PDU set according to the embodiment of the present disclosure and the data burst DB.

FIG. 15 is a diagram illustrating a correspondence between a configuration of the PDU set according to the embodiment of the present disclosure and the data burst DB.

FIG. 16 is a flowchart illustrating an example of a flow of SPS control processing according to the embodiment of the present disclosure.

FIG. 17 is a flowchart illustrating another example of the flow of the SPS control processing according to the embodiment of the present disclosure.

FIG. 18 is a diagram illustrating an example of processing performed on a data burst DB scheduled by a RAN 20 according to the embodiment of the present disclosure.

FIG. 19 is a diagram illustrating another example of the processing performed on the data burst DB scheduled by the RAN 20 according to the embodiment of the present disclosure.

FIG. 20 is a diagram illustrating an example of a flow of resource assignment processing based on a packet delay budget according to the embodiment of the present disclosure.

FIG. 21 is a diagram illustrating an example of a flow of resource assignment processing based on a measurement result of a burst arrival time according to the embodiment of the present disclosure.

FIG. 22 is a diagram illustrating an example of a flow of update processing of TSC assistance information according to the embodiment of the present disclosure.

FIG. 23 is a diagram illustrating another example (uplink) of the transmission of the scheduled data burst in 5GS according to the embodiment of the present disclosure. Description of Embodiments

Hereinafter, an embodiment of the present disclosure will be described in detail with reference to the attached drawings. Note that, in the present specification and the drawings, components having substantially the same functional configuration are denoted by the same reference sign, and redundant description is omitted.

In addition, in the present specification and the drawings, similar components of the embodiments may be distinguished from each other by attaching different alphabets or numbers after the same reference sign. Note that, when it is not particularly necessary to distinguish similar components from each other, only the same reference sign is attached.

One or more embodiments (including Examples, Modifications, and Application Examples) described below can be each independently performed. On the other hand, at least a part of each of the plurality of embodiments described below may be appropriately combined with at least a part of another embodiment to be performed. The plurality of embodiments can include novel features different from each other. Therefore, the plurality of embodiments can contribute to solving different objects or problems, and can exhibit different effects.

<<1. Outline of proposed technique>>

As described above, TSN/TSC has been supported in 5G. As a result, it is expected that a device will control an apparatus, a robot, and the like in a factory, and will distribute various contents and the like for XR or 3D hologram display via 5G.

A control signal of the apparatus and a traffic pattern of the contents of XR are scheduled/deterministic and occur in a burst manner.

In addition, for a data burst having a short periodicity, it is considered to be effective that a 5G system uses a resource assigned in a semi-persistent manner as necessary.

At this time, the 5G system can configure semi-persistent scheduling (SPS) and Configured Grant (CG) according to the data burst by considering a delay occurring in a base station and a core network. In addition, it is conceivable that the 5G system configures a plurality of SPSs and CGs according to the size of the data burst and a transmission period of each data burst.

There is known a technique in which a terminal device transmits information regarding periodic data to a base station, and the base station thereby makes a plurality of SPS configurations (see, for example, Patent Literature 1). In this technique, the terminal device receives a plurality of SPS configurations and an activation command for activating one or more of the SPS configurations from the base station. The terminal device transmits one or more data components on the basis of the activated one or more SPS configurations.

However, this technique does not disclose transmitting data according to a scheduled periodic data burst in consideration of a delay occurring in a base station and a core network.

A mechanism capable of more stably transmitting such a periodic data burst with a lower delay is required.

Therefore, the base station according to the proposed technique of the present disclosure assigns a radio resource for transmitting or receiving periodic data on the basis of at least one of an arrival time, a periodicity, and a protected window of a data burst.

Specifically, the base station determines assignment information for a radio resource regarding received data that is periodically received. The base station transmits the assignment information to a terminal device. Note that the received data is specified by an arrival time, a periodicity, and a protected window of a data burst. In addition, the assignment information is determined on the basis of at least one of the arrival time, the periodicity, and the protected window of the data burst.

The received data is, for example, data transmitted by an application server that transmits a data burst and received by the base station. In this case, the radio resource is a downlink resource. Alternatively, the received data is, for example, data transmitted by the terminal device and received by the base station. In this case, the radio resource is an uplink resource.

As a result, the base station can stably transmit a (deterministic) data burst scheduled in a low-delay wireless communication environment to the terminal device or the application server.

In addition, even when communication quality between the terminal device and the base station changes due to mobility of the terminal device, the base station can stably transmit the (deterministic) data burst scheduled in a low-delay wireless communication environment to the terminal device or the application server.

In addition, the base station configures one or more SPSs within a period of the protected window. The base station sequentially assigns data buffered before a configured SPS timing to configured downlink assignments of the configured SPS and transmits the data to the terminal device.

As a result, the base station can reduce a capacity of a buffer required for data transmission. In addition, the base station can reduce the size of data stored in the buffer when reception of all pieces of data in each scheduled data burst is completed. This allows the terminal device to complete reception of all pieces of data in each data burst earlier.

In addition, the base station can determine a scheduling method of either dynamic scheduling or SPS according to a packet delay budget in an access network (AN PDB). Note that AN PDB depends on a packet delay budget in a core network (CN PDB).

Furthermore, the base station can detect a change in a packet delay time in a core network using a packet arrival time of TSC assistance information. The base station can dynamically control distribution of delay budgets in the core network and the access network according to the detected change in the packet delay time in the core network.

<<2. Configuration example of communication system>>

<2.1. Outline of communication system>

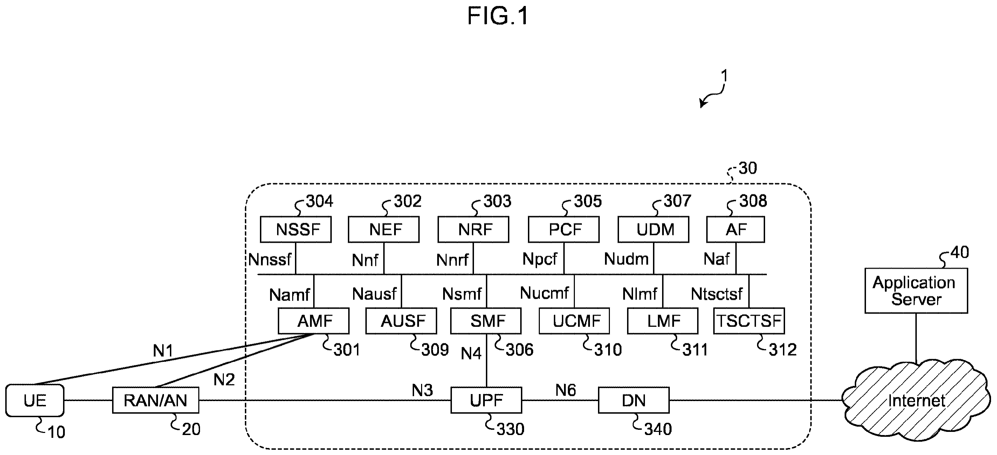

FIG. 1 is a diagram illustrating a schematic configuration example of a communication system 1 according to the embodiment of the present disclosure. The communication system 1 illustrated in FIG. 1 includes a 5G system (5GS) and an application server 40. 5GS includes a terminal device 10, a base station 20, and a core network 30.

Note that, hereinafter, the terminal device 10 is also referred to as a user equipment (UE) 10. The base station 20 is also referred to as a radio access network (RAN)/access network (AN) 20 or a (R)AN 20. The core network 30 is also referred to as a CN 30, a 5G core (5GC) 30, or an NG core (NGC) 30.

(Application server 40)

The application server 40 is connected to 5GS via, for example, the Internet. The application server 40 is a server device that processes an application. As a result, the UE 10 can use an application via a 5G service.

Note that, in the communication system 1 according to the present embodiment, a data burst is transmitted from the application server 40 to the UE 10 via the CN 30 and the (R)AN 20. In addition, a data burst is transmitted from the UE 10 to the UE 10 via the (R)AN 20 and the CN 30.

An entity (for example, a service provider) that provides an application according to the present embodiment has a contract such as service level agreement (SLA) with a public land mobile network (PLMN) operator that provides a 5G service. In this case, the application server 40 is disposed in the 5GC 30 as a DN 340. Alternatively, the application server 40 and the DN 340 may be connected to each other by a dedicated line, a virtual private network (VPN), or the like.

Note that the application server 40 may be, for example, a cloud server or an edge server.

(5GS)

A control plane function group of 5GS includes an access and mobility management function (AMF) 301, a network exposure function (NEF) 302, and a network repository function (NRF) 303.

In addition, the control plane function group includes a network slice selection function (NSSF) 304, a policy control function (PCF) 305, a session management function (SMF) 306, and a unified data management (UDM) 307.

The control plane function group includes an application function (AF) 308, an authentication server function (AUSF) 309, and a UE radio capability management function (UCMF) 310.

The control plane function group includes a location management function (LMF) 311 and a time sensitive communication and time synchronization function (TSCTSF) 312.

As described above, the control plane function group includes a plurality of network functions (NFs).

Here, the AF 308 can operate as an NF that processes a control plane of the application server 40. The AF 308 may be installed in a physically identical device as an entity logically different from the application server 40, that is, in the application server 40. In addition, the AF 308 operates as an NF that processes a control plane for a 5GS application, and can be disposed in the 5GC 30.

A service provider that manages and operates the application server 40 can acquire information from each NF of the 5G system via the NEF 302 within a range of SLA with a PLMN operator. The NEF 302 can securely ensure and disclose capability and event of each NF to the service provider.

The UDM 307 includes a unified data repository (UDR) that holds and manages subscription information, and a front end (FE) unit that processes the subscription information. The AMF 301 performs mobility management. The SMF 306 performs session management.

The PCF 305 provides a unified policy framework for governing network operation. The PCF 305 provides a policy rule to each network function of a control plane. In addition, the PCF 305 accesses contractor information of UDR for determining a policy.

The UCMF 310 holds UE radio capability information. The UE radio capability information corresponds to all UE radio capability IDs in PLMN. The UCMF 310 is responsible for assigning each PLMN-assigned UE radio capability ID.

The NSSF 304 determines allowed network slice selection assistance information (NSSAI) and configured NSSAI. In addition, the NSSF 304 determines an AMF set that is a list of candidates of the AMF 301. For example, the NSSF 304 may select the AMF 301 from the list of candidates according to a network slice used by the UE 10 or other criteria. In this case, the NSSF 304 assigns the selected AMF 301 to the UE 10.

When the UE 10 include a GNSS receiver, the LMF 311 receives measured values related to GNSS such as a code phase, a doppler, and a carrier phase from the UE 10, and calculates the location of the UE 10.

In addition, for the UE 10 that cannot receive a signal from GNSS even when the UE 10 includes a GNSS receiver or does not include GNSS, the LMF 311 may acquire information regarding the location of the UE 10 by a positioning technique called

observed time difference of arrival (OTDOA)
multi-round trip time (RTT)
downlink angle-of-departure (DL AoD)
downlink time difference of arrival (DL TDOA)
uplink time difference of arrival (UL TDOA), or
UL angle of arrival (AoA). Alternatively, the LMF 311 may acquire information regarding the location of the UE 10 by a positioning technique using a cell ID (CID).

For example, in OTDOA, the UE 10 receives downlink positioning reference signals (PRSs) from a plurality of transmission points (TPs). The UE 10 reports measured values related to a physical cell ID, a global cell ID, a TP ID, and a PRS timing to the LMF 311 via LTE positioning protocol (LPP).

As a result, the LMF 311 calculates the location of the UE 10 on the basis of information regarding known coordinates of the measured TPs and the reported relative timing of PRS.

In addition, for example, in positioning using CID, the LMF 311 calculates the location of the UE 10 on the basis of information regarding known coordinates of ng-eNB or gNB and the following measurement results reported from the UE 10.

The UE 10 reports, for example, an evolved cell global identifier (ECGI) or a physical cell ID and measurement results regarding reference signal received power (RSRP), reference signal received quality (RSRQ), and UE Rx-Tx time difference to the LMF 311. Here, the UE Rx-Tx time difference is defined as a time difference between a reception timing by the UE 10 and a transmission timing by the UE 10.

The TSCTSF 312 will be described later.

Namf is a service-based interface provided by the AMF 301. Nnef is a service-based interface provided by the NEF 302. Nnrf is a service-based interface provided by the NRF 303. Nnssf is a service-based interface provided by the NSSF 304.

Npcf is a service-based interface provided by the PCF 305. Nsmf is a service-based interface provided by the SMF 306. Nudm is a service-based interface provided by the UDM 307. Naf is a service-based interface provided by the AF 308.

Nausf is a service-based interface provided by the AUSF 309. Nucmf is a service-based interface provided by the UCMF 310. Nlmf is a service-based interface provided by the LMF 311. Ntsctsf is a service-based interface provided by the TSCTSF 312.

By making a request or subscription for a service provided by another network function, each NF receives a response or a notification from the service. That is, each NF exchanges information with another NF by means of request/response or subscription/notification via each service-based interface.

A user plane function (UPF) 330 has a function of user plane processing. The UPF 330 functions as a transfer processing unit of user plane data processed by the application server 40. The UPF 330 also functions as a gateway connected to the (R)AN 20.

The data network (DN) 340 has a function of enabling connection to a service unique to a mobile network operator (MNO), the Internet, and a third-party service.

Here, 5GS can configure each NF of the 5GC 30 by virtualization or a container and can install each NF in a cloud server. Furthermore, 5GS can configure each NF dynamically and in a re-configurable manner using a software defined network (SDN).

The (R)AN 20 has a function of enabling connection to the RAN and connection to an AN other than the RAN. The (R)AN 20 includes a base station called gNB or ng-eNB. The RAN may also be called a next generation (NG)-RAN or a 5G-RAN.

In addition, the function of the (R)AN 20 is divided into a central unit (CU) that processes L2/L3 functions of a packet data convergence protocol (PDCP) sublayer and higher, and a distributed unit (DU) that processes L2/L1 functions of a radio link control (RLC) sublayer and lower. The function of the (R)AN 20 can be located in a distributed manner via an F1 interface.

Furthermore, a function of the DU is divided into a radio unit (RU) that processes a LOW PHY sublayer and a radio, and a DU that processes sublayers of RLC, medium access control (MAC), and HIGH PHY. The function of RU can be disposed in a distributed manner, for example, via a fronthaul conforming to an evolved common public radio interface (eCPRI).

Here, 5GS can configure functions of CU and/or DU by virtualization or a container and can install the functions in a cloud server. Furthermore, 5GS can set the functions of CU and/or DU dynamically and in a re-configurable manner using SDN.

The UE 10 and the AMF 301 mutually exchange information via a reference point N1. The (R)AN 20 and the AMF 301 mutually exchange information via a reference point N2. The SMF 306 and the UPF 330 mutually exchange information via a reference point N4.

<2.2. Configuration example of information processing device>

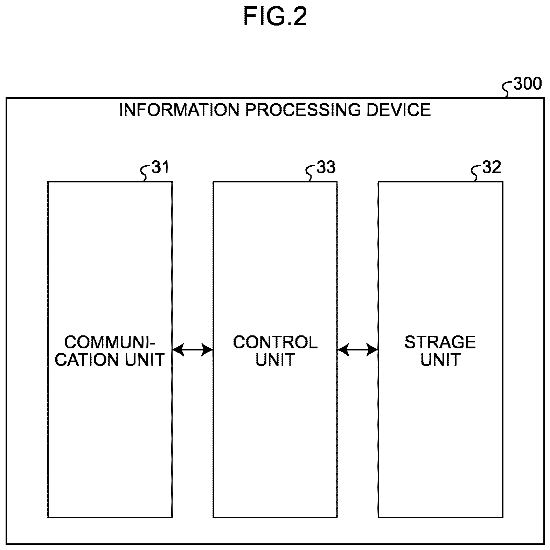

FIG. 2 is a block diagram illustrating a configuration example of an information processing device 300 according to the embodiment of the present disclosure.

The information processing device 300 is a device that implements functions of the NF and the AF 308 of the core network 30 and the application server 40. The information processing device 300 is, for example, a server device. The information processing device 300 may be a device collectively referred to as a cloud server or an edge server.

As illustrated in FIG. 2, the information processing device 300 includes a communication unit 31, a storage unit 32, and a control unit 33. Note that the configuration illustrated in FIG. 2 is a functional configuration, and a hardware configuration may be different from the configuration illustrated in FIG. 2. In addition, functions of the information processing device 300 may be implemented in a distributed manner in a plurality of physically separated configurations. For example, the information processing device 300 may include a plurality of server devices.

The communication unit 31 is a communication interface for communicating with another device. The communication unit 31 may be a network interface or an apparatus connection interface. For example, the communication unit 31 may be a local area network (LAN) interface such as a network interface card (NIC), or may be a USB interface including a universal serial bus (USB) host controller, a USB port, and the like. In addition, the communication unit 31 may be a wired interface or a wireless interface. The communication unit 31 functions as a communication means of the information processing device 300. The communication unit 31 communicates with the base station 20, another NF node, or an AN node under control of the control unit 33.

The storage unit 32 is a data readable/writable storage device such as a dynamic random access memory (DRAM), a static random access memory (SRAM), a flash memory, or a hard disk. The storage unit 32 functions as a storage means of the information processing device 300.

The control unit 33 is a controller that controls each unit of the information processing device 300. The control unit 33 is implemented by, for example, a processor such as a central processing unit (CPU), a micro processing unit (MPU), or a graphics processing unit (GPU). For example, the control unit 33 is implemented by a processor executing various programs stored in a storage device inside the information processing device 300 using a random access memory (RAM) or the like as a work area. Note that the control unit 33 may be implemented by an integrated circuit such as an application specific integrated circuit (ASIC) or a field programmable gate array (FPGA). Any of the CPU, the MPU, the GPU, the ASIC, and the FPGA can be regarded as a controller.

<2.3. Configuration example of base station>

Next, the base station 20 will be described. The base station 20 is a communication device that operates a cell and provides a wireless communication service to one or more terminal devices 10 located inside a coverage of the cell. The cell is operated according to any wireless communication system such as LTE or NR. The base station 20 is connected to the core network 30. The core network 30 is connected to a packet data network via a gateway device. In addition, the base station 20 operates a beam identifiable by synchronization signal/PBCH block (SSB), and transmits and receives data to and from one or more terminal devices 10 via one or more beams.

Note that the base station 20 may include an assembly of a plurality of physical or logical devices. For example, the base station 20 in the embodiment of the present disclosure may be divided into a plurality of devices of a baseband unit (BBU) and a radio unit (RU), and may be interpreted as an assembly of the plurality of devices. Furthermore or alternatively, the base station 20 in the embodiment of the present disclosure may be either or both of BBU and RU. BBU and RU may be connected to each other by a predetermined interface (for example, eCPRI). Furthermore or alternatively, RU may be referred to as a remote radio unit (RRU) or a radio dot (RD). Furthermore or alternatively, RU may correspond to gNB-DU described later. Furthermore or alternatively, BBU may correspond to gNB-CU described later. Alternatively, RU may be connected to gNB-DU described later. Furthermore, BBU may correspond to a combination of gNB-CU and gNB-DU described later. Furthermore or alternatively, RU may be a device integrally formed with an antenna. An antenna (for example, an antenna integrally formed with RU) included in the base station 20 may adopt an advanced antenna system and support MIMO (for example, FD-MIMO) or beamforming. In the advanced antenna system, an antenna (for example, an antenna integrally formed with RU) included in the base station 20 may include, for example, 64 transmission antenna ports and 64 reception antenna ports.

In addition, a plurality of the base stations 20 may be connected to each other. One or more base stations 20 may be included in a radio access network (RAN). That is, the base station 20 may be simply referred to as RAN, a RAN node, an access network (AN), or an AN node. RAN in LTE is called enhanced universal terrestrial RAN (EUTRAN). A RAN in NR is called NGRAN. A RAN in W-CDMA (UMTS) is called UTRAN. The base station 20 of LTE is referred to as an evolved node B (eNodeB) or an eNB. That is, the EUTRAN includes one or more eNodeBs (eNBs). In addition, the base station 20 of NR is referred to as gNodeB or gNB. That is, NGRAN includes one or more gNBs. Furthermore, the EUTRAN may include gNB (en-gNB) connected to a core network (EPC) in an LTE communication system (EPS). Similarly, the NGRAN may include an ng-eNB connected to a core network 5GC in a 5G communications system (5GS). Furthermore or alternatively, when the base station 20 is eNB, gNB, or the like, the base station 20 may be referred to as 3GPP Access. Furthermore or alternatively, when the base station 20 is a wireless access point (e.g., WiFi (registered trademark) access point), the base station 20 may be referred to as Non-3GPP Access. Furthermore or alternatively, the base station 20 may be an optical extension device called a remote radio head (RRH). Furthermore or alternatively, when the base station 20 is gNB, the base station 20 may be referred to as a combination of the above-described gNB central unit (CU) and gNB distributed unit (DU) or either of them. The gNB central unit (CU) hosts a plurality of upper layers (for example, RRC, SDAP, and PDCP) of Access Stratum for communication with the UE. On the other hand, gNB-DU hosts a plurality of lower layers (for example, RLC, MAC, and PHY) of Access Stratum. That is, among messages and pieces of information described later, RRC signalling (for example, various SIBs including a MIB and a SIB1, an RRCSetup message, and an RRCReconfiguration message) may be generated by gNB CU, while DCI and various physical channels (for example, PDCCH and PBCH) described later may be generated by gNB-DU. Alternatively, in the RRC signalling, for example, some configurations such as IE: cellGroupConfig may be generated by gNB-DU, and the remaining configurations may be generated by gNB-CU. These configurations may be transmitted and received to and from an F1 interface described later. The base station 20 may be configured to be able to communicate with another base station 20. For example, when the plurality of base stations 20 are eNBs or a combination of eNB and en-gNB, the base stations 20 may be connected to each other by an X2 interface. Furthermore or alternatively, when the plurality of base stations 20 are gNBs or a combination of gn-eNB and gNB, the devices may be connected to each other by an Xn interface. Furthermore or alternatively, when the plurality of base stations 20 is a combination of a gNB central unit (CU) and a gNB distributed unit (DU), the devices may be connected to each other by the above-described F1 interface. A message/information (RRC signalling or DCI information and physical channel) described later may be communicated (for example, via the X2, the Xn, or the F1 interface) among the plurality of base stations 20.

Furthermore, as described above, the base station 20 may be configured to manage a plurality of cells. A cell provided by the base station 20 is called a serving cell. The serving cell includes a primary cell (PCell) and a secondary cell (SCell). When a dual connectivity (for example, a EUTRA-EUTRA dual connectivity, a EUTRA-NR dual connectivity (ENDC), a EUTRA-NR dual connectivity with 5GC, an NR-EUTRA dual connectivity (NEDC), or an NR-NR dual connectivity) is provided to a UE (for example, the terminal device 10), a PCell and zero or one or more SCell(s) provided by a master node (MN) are called a Master Cell Group. Furthermore, the serving cell may include a primary secondary cell or primary SCG cell (PSCell). That is, when the dual connectivity is provided to the UE, a PSCell and zero or one or more SCell(s) provided by a secondary node (SN) are called a secondary cell group (SCG). Unless a special configuration (for example, PUCCH on SCell) is made, a physical uplink control channel (PUCCH) is transmitted in the PCell and the PSCell, but is not transmitted in the SCell. In addition, a radio link failure is also detected in the PCell and the PSCell, but is not detected in the SCell (does not have to be detected). As described above, the PCell and the PSCell have special roles in the serving cell(s), and therefore are also called a special cell (SpCell). One downlink component carrier and one uplink component carrier may be associated with one cell. In addition, a system bandwidth corresponding to one cell may be divided into a plurality of bandwidth parts. In this case, one or more bandwidth parts (BWPs) may be configured for the UE, and one bandwidth part may be used for the UE as an active BWP. In addition, radio resources (for example, a frequency band, a numerology (subcarrier spacing), and a slot configuration) that can be used by the terminal device 10 may vary depending on a cell, a component carrier, or a BWP.

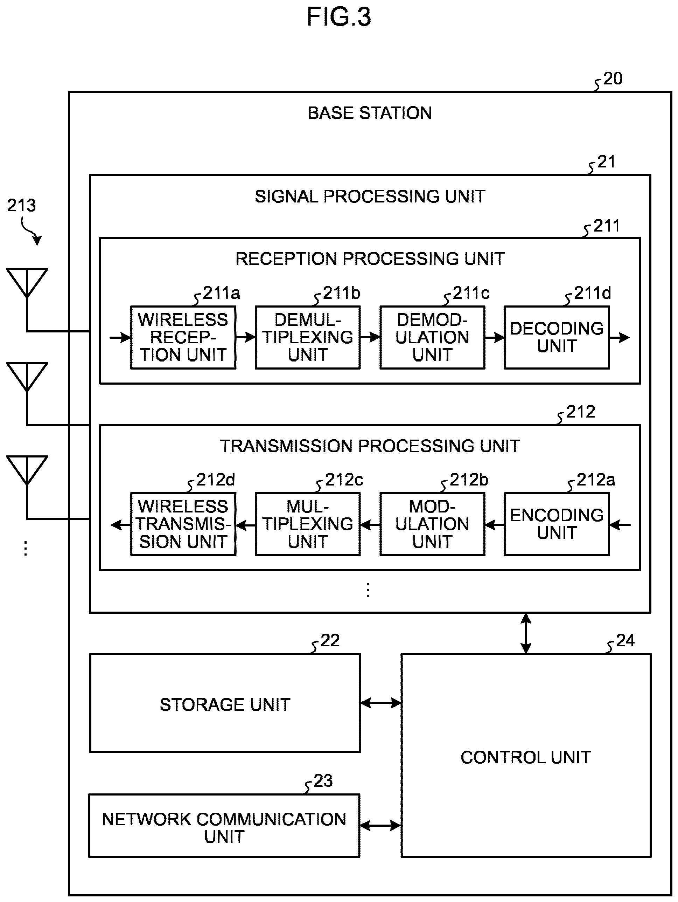

FIG. 3 is a diagram illustrating a configuration example of the base station 20 according to the embodiment of the present disclosure. The base station 20 is a communication device (radio system) that wirelessly communicates with the terminal device 10. The base station 20 is a kind of information processing device.

The base station 20 includes a signal processing unit 21, a storage unit 22, a network communication unit 23, and a control unit 24. Note that the configuration illustrated in FIG. 3 is a functional configuration, and a hardware configuration may be different from the configuration illustrated in FIG. 3. In addition, functions of the base station 20 may be implemented in a distributed manner in a plurality of physically separated devices. For example, as described above, the functions of the base station 20 are distributed to CU and DU, or CU, DU, and RU.

The signal processing unit 21 is a wireless communication interface (communication unit) that wirelessly communicates with other communication devices (for example, the terminal device 10 and another base station 20). The signal processing unit 21 is a wireless transceiver that operates under control of the control unit 24. The signal processing unit 21 may be compatible with a plurality of wireless access systems. For example, the signal processing unit 21 may be compatible with both NR and LTE. The signal processing unit 21 may be compatible with another cellular communication system such as W-CDMA or cdma2000. In addition, the signal processing unit 21 may be compatible with a wireless LAN communication system in addition to the cellular communication system. Of course, the signal processing unit 21 may be compatible with only one wireless access system.

The signal processing unit 21 includes a reception processing unit 211, a transmission processing unit 212, and an antenna 213. The signal processing unit 21 may include a plurality of the reception processing units 211, a plurality of the transmission processing units 212, and a plurality of the antennas 213. Note that, when the signal processing unit 21 is compatible with a plurality of wireless access systems, each unit of the signal processing unit 21 can be configured individually for each wireless access system. For example, if the base station 20 is compatible with NR and LTE, the reception processing unit 211 and the transmission processing unit 212 may be individually configured for NR and LTE.

The reception processing unit 211 processes an uplink signal received via the antenna 213. The reception processing unit 211 includes a wireless reception unit 211a, a demultiplexing unit 211b, a demodulation unit 211c, and a decoding unit 211d.

The wireless reception unit 211a performs downconversion, removal of an unnecessary frequency component, control of an amplification level, quadrature demodulation, conversion to a digital signal, removal of a guard interval, extraction of a frequency domain signal by fast Fourier transform, and the like on an uplink signal. For example, it is assumed that the wireless access system of the base station 20 is a cellular communication system such as LTE. At this time, the demultiplexing unit 211b separates an uplink channel such as a physical uplink shared channel (PUSCH) or a physical uplink control channel (PUCCH) and an uplink reference signal from a signal output from the wireless reception unit 211a. The demodulation unit 211c demodulates a received signal using a modulation system such as binary phase shift keying (BPSK) or quadrature phase shift keying (QPSK) with respect to a modulation symbol of the uplink channel. The modulation system used by the demodulation unit 211c may be multilevel QAM such as 16 quadrature amplitude modulation (16QAM), 64QAM, or 256QAM. The decoding unit 211d performs decoding processing on an encoded bit of the demodulated uplink channel. The decoded uplink data and uplink control information are output to the control unit 24.

The transmission processing unit 212 performs transmission processing on downlink control information and downlink data. The transmission processing unit 212 includes an encoding unit 212a, a modulation unit 212b, a multiplexing unit 212c, and a wireless transmission unit 212d.

The encoding unit 212a encodes downlink control information and downlink data input from the control unit 24 using an encoding system such as block encoding, convolutional encoding, or turbo encoding. Here, the encoding may be performed with a polar code or a low density parity check code (LDPC code). The modulation unit 212b modulates an encoded bit output from the encoding unit 212a by a predetermined modulation system such as BPSK, QPSK, 16QAM, 64QAM, or 256QAM. The multiplexing unit 212c multiplexes a modulation symbol of each channel and a downlink reference signal, and locates the multiplexed result in a predetermined resource element. The wireless transmission unit 212d performs various types of signal processing on a signal from the multiplexing unit 212c. For example, the wireless transmission unit 212d performs processing such as conversion into a time domain by fast Fourier transform, addition of a guard interval, generation of a baseband digital signal, conversion to an analog signal, quadrature modulation, up-conversion, removal of an extra frequency component, and power amplification. A signal generated by the transmission processing unit 212 is transmitted from the antenna 213.

The storage unit 22 is a storage device capable of reading and writing data, such as a DRAM, an SRAM, a flash memory, or a hard disk. The storage unit 22 functions as a storage means of the base station 20.

The network communication unit 23 is a communication interface for communicating with other devices (for example, another base station 20). For example, the network communication unit 23 is a LAN interface such as an NIC. The network communication unit 23 may be a USB interface including a USB host controller, a USB port, and the like. In addition, the network communication unit 23 may be a wired interface or a wireless interface. The network communication unit 23 functions as a network communication means of the base station 20. The network communication unit 23 communicates with other devices under control of the control unit 24.

The control unit 24 is a controller that controls each unit of the base station 20. The control unit 24 is implemented by, for example, a processor such as a CPU, an MPU, or a GPU. For example, the control unit 24 is implemented by a processor executing various programs stored in a storage device inside the base station 20 using a RAM or the like as a work area. Note that the control unit 24 may be implemented by an integrated circuit such as an ASIC or an FPGA. Any of the CPU, the MPU, the GPU, the ASIC, and the FPGA can be regarded as a controller.

<2.4. Configuration example of terminal device>

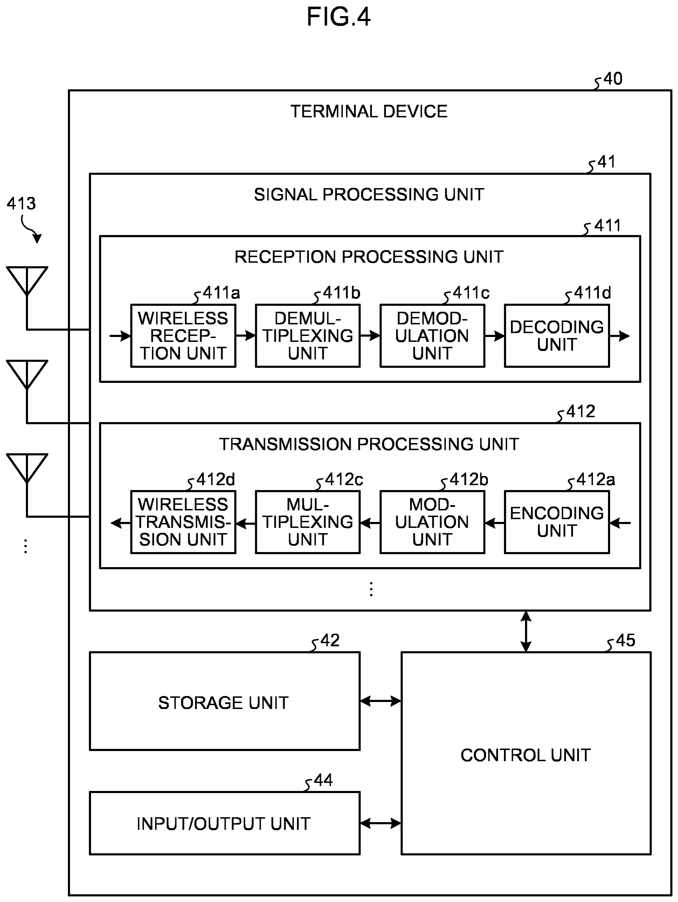

A configuration example of the terminal device 10 according to the embodiment of the present disclosure will be described with reference to FIG. 4. FIG. 4 is a block diagram illustrating a configuration example of the terminal device 10 according to the embodiment of the present disclosure.

The terminal device 10 is a wireless communication device that performs wireless communication with the base station 20. The terminal device 10 is, for example, a mobile phone, a smart device (a smartphone or a tablet), a personal digital assistant (PDA), or a personal computer. The terminal device 10 may be a head mounted display, a VR goggle, or the like having a function of wirelessly transmitting and receiving data.

In addition, the terminal device 10 may be able to perform sidelink communication with another terminal device 10. The terminal device 10 may be able to use an automatic retransmission technique such as hybrid automatic repeat request (HARQ) when performing sidelink communication. The terminal device 10 may be capable of non orthogonal multiple access (NOMA) communication with the base station 20. Note that the terminal device 10 may also be able to perform NOMA communication in communication (sidelink) with another terminal device 10. In addition, the terminal device 10 may be capable of low power wide area (LPWA) communication with other communication devices (for example, the base station 20 and another terminal device 10). In addition, the wireless communication used by the terminal device 10 may be wireless communication using millimeter waves. Note that the wireless communication (including sidelink communication) used by the terminal device 10 may be wireless communication using radio waves or wireless communication using infrared rays or visible light (optical radio).

The terminal device 10 may perform communication by being simultaneously connected to a plurality of base stations 20 or a plurality of cells. For example, when one base station 20 can provide a plurality of cells, the terminal device 10 can execute carrier aggregation by using one cell as a pCell and using another cell as an sCell. In addition, when each of a plurality of the base stations 20 can provide one or more cells, the terminal device 10 can implement dual connectivity (DC) by using one or more cells managed by one base station 20 (MN (for example, MeNB or MgNB)) as a pCell or a pCell and an sCell(s) and using one or more cells managed by the other base station 20 (SN (for example, SeNB or SgNB)) as a pCell (PSCell) or a pCell (PSCell) and an sCell(s). The DC may be referred to as a multi connectivity (MC).

Note that, when a communication area is supported via cells of different base stations 20 (a plurality of cells having different cell identifiers or the same cell identifier), the plurality of cells can be bundled, and the base stations 20 and the terminal device 10 can communicate with each other by a carrier aggregation (CA) technique, a dual connectivity (DC) technique, or a multi-connectivity (MC) technique. Alternatively, via cells of different base stations 20, the terminal device 10 and the plurality of base stations 20 can communicate with each other by a coordinated multi-point transmission and reception (CoMP) technique.

The terminal device 10 includes a signal processing unit 11, a storage unit 12, a network communication unit 13, an input/output unit 14, and a control unit 15. Note that the configuration illustrated in FIG. 4 is a functional configuration, and a hardware configuration may be different from the configuration illustrated in FIG. 4. In addition, functions of the terminal device 10 may be implemented in a distributed manner in a plurality of physically separated configurations.

The signal processing unit 11 is a communication unit for wirelessly communicating with other wireless communication devices (for example, the base station 20 and another terminal device 10). The signal processing unit 11 operates under control of the control unit 15. The signal processing unit 11 may be a wireless transceiver corresponding to one or more wireless access systems. For example, the signal processing unit 11 may be compatible with both NR and LTE. The signal processing unit 11 may be compatible with W-CDMA and cdma2000 in addition to NR and LTE. In addition, the signal processing unit 11 may be compatible with communication using NOMA.

The signal processing unit 11 includes a reception processing unit 111, a transmission processing unit 112, and an antenna 113. The signal processing unit 11 may include a plurality of the reception processing units 111, a plurality of the transmission processing units 112, and a plurality of the antennas 113. Configurations of the signal processing unit 11, the reception processing unit 111, the transmission processing unit 112, and the antenna 113 are similar to those of the signal processing unit 21, the reception processing unit 211, the transmission processing unit 212, and the antenna 214 of the base station 20.

The storage unit 12 is a storage device capable of reading and writing data, such as a DRAM, an SRAM, a flash memory, or a hard disk. The storage unit 12 functions as a storage means of the terminal device 10.

The network communication unit 13 is a communication interface for communicating with other devices connected via a network. For example, the network communication unit 13 is a LAN interface such as an NIC. The network communication unit 13 may be a wired interface or a wireless interface. The network communication unit 13 functions as a network communication means of the terminal device 10. The network communication unit 13 communicates with other devices under control of the control unit 15.

The input/output unit 14 is a user interface for exchanging information with a user. For example, the input/output unit 14 is an operation device for a user to perform various operations, such as a keyboard, a mouse, an operation key, or a touch panel. Alternatively, the input/output unit 14 is a display device such as a liquid crystal display or an organic electroluminescence display (organic EL display). The input/output unit 14 may be an acoustic device such as a speaker or a buzzer. In addition, the input/output unit 14 may be a lighting device such as a light emitting diode (LED) lamp. The input/output unit 14 functions as an input/output means (an input means, an output means, an operation means, or a notification means) of the terminal device 10. For example, when the terminal device 10 is a sensor or the like, the input/output unit 14 may be omitted.

The control unit 15 is a controller that controls each unit of the terminal device 10. The control unit 15 is implemented by, for example, a processor such as a CPU, an MPU, or a GPU. For example, the control unit 15 is implemented by a processor executing various programs stored in a storage device inside the terminal device 10 using a RAM or the like as a work area. Note that the control unit 15 may be implemented by an integrated circuit such as an ASIC or an FPGA. Any of the CPU, the MPU, the GPU, the ASIC, and the FPGA can be regarded as a controller.

<<3. Application of TSN to 5GS>>

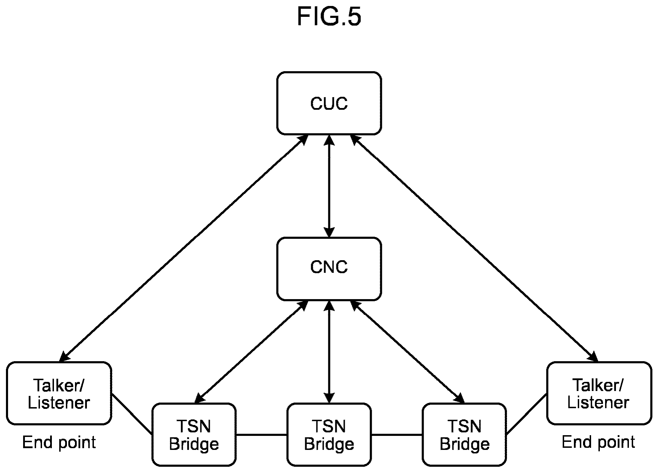

FIG. 5 is a diagram illustrating an outline of TSN. In TSN, a packet transmitted from a Talker is transmitted to a Listener via a plurality of bridges (hereinafter, also referred to as a TSN bridge).

Each of the Talker and the Listener is a device or an application serving as an end point (end station) of communication. For example, each of the Talker and the Listener may be a server or a terminal device, or may be an application function included in the server or the terminal device.

In addition, the TSN bridge is a network disposed between the Talker and the Listener. In order to implement the function of TSN, a centralized user configuration (CUC) and a centralized network configuration (CNC) are disposed in TSN.

CUC is an entity that takes up requirements and configurations from an endpoint and transmits the requirements and configurations to CNC. CNC is an entity that issues various instructions for implementing the function of TSN to the TSN bridge.

<3.1. Configuration of 5GS bridge (5G system bridge) >

5GS can provide time sensitive communications (TSC) and time synchronization independently or in conjunction with another system. That is, 5GS can function as the TSN bridge. Hereinafter, 5GS functioning as the TSN bridge is also referred to as a 5GS bridge.

For time sensitive communication, 5GS supports the following features:

Delay-critical guaranteed bit rate (GBR)
Mechanism of Hold and Forward for scheduled traffic
TSC assistance information (TSCAI) expressing features of TSC flow traffic
· Time synchronization expressing a method by which 5GS operates as a precision time protocol (PTP) relay, a boundary clock, or a transparent clock.

In order to support these features that enable time sensitive communication and time synchronization, the UE 10 needs to establish an always-on PDU session when establishing a PDU session.

In order to provide a time synchronization service, 5GS is configured to operate in one or more PTP instances. 5GS is configured to operate in any one of the following modes for each PTP instance:

Time-aware system
Boundary clock
Peer-to-peer transparent clock
End-to-end transparent clock

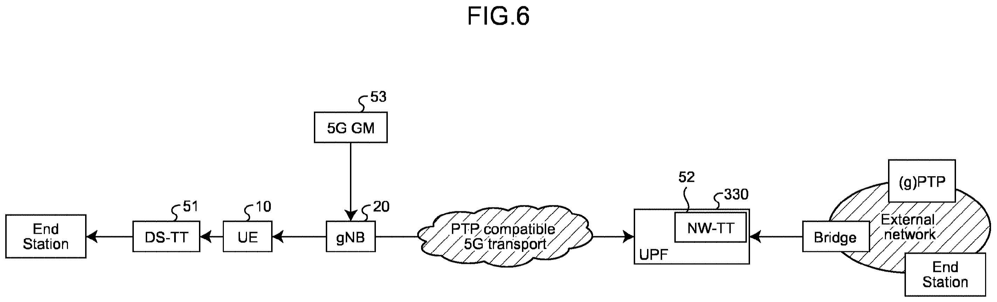

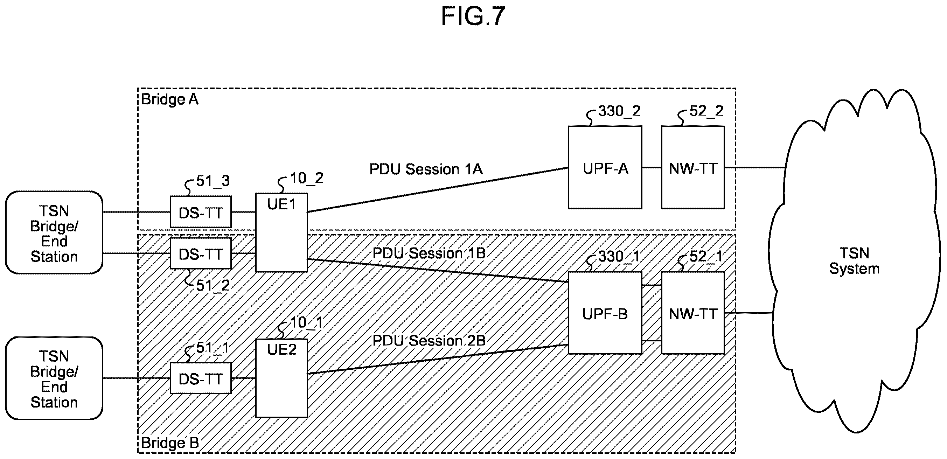

FIG. 6 is a diagram illustrating an example of a configuration of 5GS modeled as a PTP instance. In FIG. 6, two synchronization systems are illustrated: 5G clock synchronization and generalized PTP/PTP ((g)PTP) domain synchronization. Note that this drawing and FIG. 7 described later are on the basis of the drawings described in the literature "3GPP TS23.501".

5G access stratum (AS) timing distribution is used for NG RAN (gNB 20 in FIG. 6) synchronization and provided to the UE 10 on a wireless interface. The (g)PTP domain synchronization provides a synchronization service for an end station of a (g)PTP network. The two synchronization processes are independent of each other, and the gNB 20 only needs to be synchronized only for a clock of a 5G grand master (GM) 53.

5GS is modeled as an entity conforming to Institute of Electrical and Electronics Engineers (IEEE) Std 802.1AS or IEEE Std 1588.

When 5GS functions as a TSN bridge, a TSN translator (TT) is disposed in the TSN bridge. The TT is a function for converting a TSN configuration or the like into a configuration inside 5G.

The TT includes a device-side TSN translator (DS-TT) 51 disposed on a device side (between the UE 10 and an end station) and a network-side TSN translator (NW-TT) 52 disposed on a network side. Note that, when the UE 10 is a device of an endpoint of TSN, the DS-TT 51 does not have to be necessarily disposed.

The DS-TT 51 and the NW-TT 52 disposed at both ends of 5GS support operation according to a profile of IEEE Std 802.1AS or IEEE Std 1588.

The UE 10, the gNB 20, the UPF 330, the NW-TT 52, and the DS-TT 51 are synchronized with the 5G GM 53 which is a 5G internal clock.

With this configuration, 5GS is treated as a time-aware system, an IEEE1588 boundary clock, or a transparent clock.

When 5GS is configured to operate as the time-aware system, the NW-TT 52 needs to determine a Sync and Announce message interval for a PTP port located at the other end of a link with a follower PTP port connected to 5GS. That is, the Sync and Announce message for synchronization is exchanged between the PTP ports at the determined periodicity.

When 5GS is configured to operate as the boundary clock, the NW-TT 52 needs to determine the Announce interval on the basis of the configuration of the follower port of 5GS.

5GS operates as a layer 2 ethernet bridge. For example, 5GS is integrated with a time sensitive network (TSN) conforming to IEEE, and functions of 5GS can operate as one or more TSN bridges.

FIG. 7 is a diagram illustrating an example of a configuration of the 5GS bridge. The 5GS bridge includes a port of a NW-TT 52_1 on one UPF 330_1 side, a user plane tunnel between a UE 10_1 and a UPF 330_1, and a port on a DS-TT 51_1 side.

In addition, the 5GS bridge can configure a plurality of 5GS bridges via a plurality of UEs (UE 10_1 and UE 10_2) and one UPF (UPF 330_1). At this time, the DS-TT 51_1 and the DS-TT 51_2 are configured in the UE 10_1 and the UE 10_2, respectively.

In addition, the 5GS bridge can configure a plurality of 5GS bridges via one UE (UE 10_2) and a plurality of UPFs (UPF 330_1 and UPF 330_2). At this time, the NW-TT 52_1 and the NW-TT 52_2 are configured in the UPF 330_1 and the UPF 330_2, respectively, and the DS-TT 51_2 and the DS-TT 51_3 are configured in the UE 10_2.

For each 5GS bridge of TSN, the NW-TT 52 supports connection with TSN. A port on the DS-TT 51 side is associated with a protocol data unit (PDU) session that provides connection with TSN.

The 5GS bridge is constructed for each UE 10 with respect to each network instance or data network name (DNN)/single network slice selection assistance information(S-NSSAI).

A bridge identifier (ID) of the TSN bridge of 5GS is associated with a UPF ID of the UPF 330. Here, the bridge ID is an identifier for identifying a bridge instance in 5GS, and is obtained from a unique bridge MAC address. Alternatively, a unique value used in 5GS may be set as the bridge ID.

The AF 308 for TSN can hold information of a port on a UPF 330/NW-TT 52 side. The UPF 330/NW-TT 52 transfers traffic to an appropriate output port on the basis of traffic transfer information.

In a viewport of the AF 308 for TSN, the TSN bridge of 5GS includes one NW-TT 52 in the UPF 330. The NW-TT 52 can have a plurality of ports for transferring traffic.

One PDU session is constructed for each port of the DS-TT 51 corresponding to the UPF 330. All PDU sessions connected to the same TSN via a specific UPF 330 are grouped into one 5GS bridge (for example, a bridge A or a bridge B).

Capability of a port on a UE 10/DS-TT 51 side and capability of a port on a UPF 330/NW-TT 52 side are integrated as a part of configuration of the 5GS bridge. The AF 308 for TSN is notified of the integrated capability, and the integrated capability is transferred to CNC (see FIG. 5) for registering and updating the TSN bridge.

In order to provide features of IEEE 802.1Q for TSN including the scheduled traffic for TSN on the 5GS bridge, 5GS can support the following functions:

Function of setting bridge information in 5GS
Function of reporting bridge information of 5GS bridge to TSN after establishing PDU session
Function of receiving configuration from TSN
Function of mapping configuration acquired from TSN to 5GS QoS information of quality of service (QoS) flow of corresponding PDU session in order to perform efficient time-aware scheduling

In addition, the bridge information of the 5GS bridge includes at least the following contents:

Information for 5GS bridge
Bridge ID
Number of ports
List of port numbers
Information regarding capability of 5GS bridge
Delay of 5GS bridge and delay of 5GS bridge including input port number, output port number, and class of traffic for each class of traffic and for each of ports forming a pair
· Transmission propagation delay and propagation delay including output port number for each port
· Virtual local area network (VLAN) configuration
· Topology of 5GS bridge
Link layer discovery protocol (LLDP) configuration
Chassis ID subtype and Chassis ID of 5GS bridge
LLDP discovery information of discovered adjacent device on each port of NW-TT 52 and each port of DS-TT 51
Traffic class for each port and priority thereof
Stream parameter for supporting per-stream filtering and policing (PSFP)
· Maximum number of stream filter instances supported by bridge
· Maximum number of stream gate instances supported by bridge
· Optionally, maximum number of flow measurement instances supported by bridge
· Maximum values of AdminControlListLength and OperControlListLength parameters supported by bridge

<3.2. Processing related to timing information>

The 5G internal clock is used on all user plane nodes of 5GS. The UPF 330 and the NW-TT 52 can acquire the 5G internal clock via a transport network conforming to PTP.

By receiving signaling including timing information related to an absolute timing of a radio frame, the UE 10 can use the 5G internal clock. The DS-TT 51 can use the 5G internal clock via the UE 10.

Here, a procedure for distributing a grand master (GM) clock to PTP instances and a procedure for recording a timestamp in order to operate as the time-aware system conform to IEEE Std 802.1AS.

In a follower state, the NW-TT 52 receives a downlink gPTP message from a port. Upon receiving, the NW-TT 52 records an input timestamp for each gPTP event message, that is, each Sync message, for downlink time synchronization.

In addition, the NW-TT 52 calculates a link delay expressed by a TSN grand master (GM) time from the gPTP entity connected to the NW-TT 52 that is an upstream TSN node. The NW-TT 52 uses a cumulative rate ratio received in a payload of the gPTP message carried in a 1-step Sync message or a 2-step Follow_up message for this calculation.

Then, the NW-TT 52 calculates a new cumulative rate ratio and updates the payload of the gPTP message carried in the 1-step Sync message or the 2-step Follow_up message in the following procedure.

1) The NW-TT 52 adds a link delay at a TSN GM time from an upstream TSN node to a correction field.
2) The NW-TT 52 replaces the cumulative rate ratio received from the TSN node with a new cumulative rate ratio.
3) The NW-TT 52 adds TSi to a suffix field of a gPTP packet.

The UPF 330/NW-TT 52 assigns the gPTP message to a PTP instance of the NW-TT 52 using the following information:

Input port number of NW-TT 52
Domain number of received gPTP message
Standards development organization identifier (sdoId)

If the NW-TT 52 does not have a corresponding PTP instance, the UPF 330/NW-TT 52 discards the message.
The UPF 330/NW-TT 52 transfers the gPTP message from TSN to a PTP port of the DS-TT 51 in a leader state in the PTP instance via a PDU session terminated in the UPF 330 established by the UE 10 with TSN.
The UPF 330/NW-TT 52 transfers the gPTP message to a PTP port in a leader state of the NW-TT 52 in the PTP instance.
All the gPTP messages are transmitted in a QoS flow that meets an upper limit of residence time.
Here, a relationship between the follower and the leader corresponds to a relationship between a master and a slave.
Here, it is assumed that a PTP port of the DS-TT 51 is in a follower state and a PTP port of the NW-TT 52 is in a leader state, or that a PTP port of the DS-TT 51 is in a leader state and a PTP port of the NW-TT 52 is in a follower state. In this case, a sum of a residence time between the UE 10 and the DS-TT 51 and a packet delay budget of a QoS flow needs to be less than an upper limit of a residence time for the time-aware system.
It is assumed that a PTP port of the DS-TT 51 is in a follower state and the other PTP port of the DS-TT 51 is in a leader state. In this case, a sum of residence times for the two ports of the DS-TTs 51 and packet delay budgets of the QoS flows of the two PDU sessions needs to be less than an upper limit of the residence time for the time-aware system.
The UE 10 receives the gPTP message and transfers the gPTP message to the DS-TT 51. The DS-TT 51 generates an output timestamp (TSe) for a gPTP event message, that is, a Sync message, in an external TSN domain. A difference between TSi and TSe can be considered as a residence time in 5GS expressed by a 5GS time for this gPTP message.
The DS-TT 51 converts the residence time in 5GS to TSN GM. For the conversion, the DS-TT 51 uses a cumulative rate ratio received in a payload of the gPTP message carried in a 1-step Sync message or a 2-step Follow_up message. The DS-TT 51 updates a payload of the gPTP message to be transmitted to a downstream TSN node serving as a gPTP entity connected to the DS-TT 51 in the following procedure.

1) The DS-TT 51 adds the calculated residence time at the TSN GM time to a correction field.
2) The DS-TT 51 deletes a suffix field including TSi.

When the input DS-TT 51 gives a notification of support for a PTP profile of IEEE Std 802.1AS, the network configures a PTP instance with the PTP profile for the input DS-TT 51. In this case, the input DS-TT 51 executes processing on an uplink gPTP message for the received PTP instance in the following procedure.

1) The input DS-TT 51 adds a link delay at the TSN GM time from the upstream TSN node serving as a gPTP entity connected to the DS-TT 51 to a correction field.
2) The input DS-TT 51 updates the cumulative rate ratio received from the upstream TSN node connected to the DS-TT 51 with a new cumulative rate ratio.
3) The input DS-TT 51 adds TSi to a suffix field of a gPTP packet.

The UE 10 transparently transfers the gPTP message from the DS-TT 51 to the UPF 330/NW-TT 52.
When the port of the input DS-TT 51 is in a passive state, the UPF 330/NW-TT 52 discards the gPTP message.
When a port of the input DS-TT 51 is in a follower state, the gPTP message is transferred in the following procedure.

1) In a case of synchronization with an end station at a subsequent stage of the NW-TT 52, an output port is the UPF 330/NW-TT 52.

2) For the received uplink gPTP message, the output UPF 330/NW-TT 52 executes the following operations:

2-1) The output UPF 330/NW-TT 52 adds the residence time at the calculated TSN GM time to a correction field.

2-2) The output UPF 330/NW-TT 52 deletes a suffix field including TSi.

2-3) In a case of synchronization with an end station at a subsequent stage of the DS-TT 51, an output TT is the DS-TT 51 of another UE 10. In this case, the UPF 330/NW-TT 52 uses the port number of the input DS-TT 51, the domain number of the received gPTP message to assign the gPTP message to a PTP instance of the NW-TT 52, and sdoId.

2-4) When the NW-TT 52 does not have a corresponding PTP instance, the UPF 330/NW-TT 52 discards the message.

2-5) The UPF 330/NW-TT 52 transfers the received uplink gPTP message to a PTP port in a leader state of the DS-TT 51 of the PTP instance. The output DS-TT 51 executes the same operation as the output UPF 330/NW-TT 52 described above.

In addition, a procedure for distributing a GM clock to PTP instances and a procedure for recording a timestamp such that the GM clock operates as a transparent clock and a boundary clock when the GM clock is an external clock conform to IEEE Std 1588.

Upon receiving a PTP event message from an upstream PTP instance, an input TT of the NW-TT 52 or the DS-TT 51 records an input timestamp (TSi) for each PTP event message, that is, each Sync message.

A PTP port of the input TT measures a link delay from an upstream PTP instance, and updates a payload of a PTP message carried in a 1-step Sync message or a 2-step Follow_up message in the following procedure.

1) When the PTP port of the input TT has a measured link delay, the PTP port adds the link delay measured at the PTP GM time from the upstream PTP instance to a correction field.

2) When the PTP port of the input TT has a measured link delay and can use a rate ratio, the PTP port updates the cumulative rate ratio received from the upstream PTP instance with a new cumulative rate ratio.

3) The PTP port of the input TT adds TSi to a suffix field of the PTP message.

When 5GS operates as an end-to-end transparent clock, the residence time at the PTP GM time is calculated using a residence time in 5GS at the 5G GM time (and, if necessary, a correction factor). This is because the end-to-end transparent clock does not support a peer-to-peer delay mechanism.

The residence time at the PTP GM time is used to update a correction field of the received PTP Sync or Follow_up message.

The PTP port of the input TT transfers the PTP message to the UPF 330/NW-TT 52. The UPF 330/NW-TT 52 further distributes the PTP message in the following procedure.

1) When 5GS is configured to operate as a boundary clock,

1-1) The UPF 330/NW-TT 52 assigns the port number of the input DS-TT 51 and the PTP message to the PTP instance of the NW-TT 52 using the following information:

Domain number of received PTP message
sdoId

1-2) When the NW-TT 52 does not have a corresponding PTP instance, the UPF 330/NW-TT 52 discards the message.

1-3) The UPF 330/NW-TT 52 generates a Sync message and a Follow_up message for a 2-step operation. On the basis of the Sync and Follow_up messages received at the ports in a leader state of the NW-TT 52 and the DS-TT 51 of the PTP instance, the UPF 330/NW-TT 52 generates these messages.

2) The UPF 330/NW-TT 52 transfers the regenerated Sync message and Follow_up message for a 2-step operation to a PDU session associated with a leader port of the NW-TT 52 of the PTP instance. In addition, the UPF 330/NW-TT 52 transfers the regenerated Sync message and Follow_up message for a 2-step operation to a PDU session associated with a leader port of the DS-TT 51.

3) When 5GS is configured to operate as a transparent clock,

3-1) The UPF 330/NW-TT 52 assigns the port number of the input TT and the PTP message to the PTP instance of the NW-TT 52 using the following information:

Domain number of received PTP message
sdoId

3-2) When the NW-TT 52 does not have a corresponding PTP instance, the UPF 330/NW-TT 52 discards the message.
3-3) The UPF 330/NW-TT 52 transfers the received Sync message to a PTP port of the DS-TT 51 of the PTP instance and a port of the NW-TT 52 of the PTP instance, except an input PTP port of the input TT. The UPF 330/NW-TT 52 transfers the received Sync message via a corresponding PDU session terminated in the UPF 330.

A PTP port of the output TT generates a timestamp (TSe) for a PTP event message, that is, a Sync message, to an external PTP network. A difference between TSi and TSe can be considered as a residence time in 5GS expressed by a 5GS time for this PTP message.

If available, the PTP port of the output TT converts the residence time in 5GS to the PTP GM time using a rate ratio. This rate ratio is included in a payload of the PTP message carried in the 1-step Sync message or the 2-step Follow_up message.

The PTP port of the output TT updates the payload of the PTP message that is the 1-step Sync message or the 2-step Follow_up message to be transmitted to a downstream PTP instance in the following procedure.

1) The PTP port of the output TT adds the calculated residence time to a correction field.
2) The PTP port of the output TT deletes a suffix field of the PTP message including TSi.

<3.3. TSC assistance information>

5GS can support scheduled deterministic communication in which traffic whose characteristics are determined in advance is determined.

The deterministic communication provides TSC assistance information describing characteristics of TSC flow traffic at an input interface of the gNB 20 and an output interface of the UE 10 with respect to traffic in an uplink direction and a downlink direction.

The TSC assistance information includes a flow direction indicating a direction of an uplink or downlink TSC flow and a periodicity of a data burst.

Furthermore, the TSC assistance information optionally includes a burst arrival time and a survival time.

In a case of a downlink flow direction, the burst arrival time is defined as a time as late as possible for a first packet of a data burst to reach an input of the RAN 20. In addition, in a case of an uplink flow direction, the burst arrival time is defined as a time as late as possible to reach an output interface of the UE 10.

The survival time is defined as a period during which an application that processes a communication service can continue to operate without receiving an expected message. The survival period is a period starting from the burst arrival time, and is shorter than a periodicity of the data burst.

Here, the data burst is a set including a plurality of PDUs generated and transmitted by an application within a short period.

If the SMF 306 provides TSC assistance information to the NG-(R)AN 20, the NG-(R)AN 20 can use this TSC assistance information. The NG-(R)AN 20 can find a traffic pattern of TSC from the TSC assistance information. As a result, the NG-(R)AN 20 can efficiently schedule a QoS flow of a deterministic traffic pattern using at least one of the following items:

CG
SPS
Dynamic scheduling
Dynamic grant (DG)

The TSCTSF 312 generates a TSC assistance container on the basis of information provided from the AF 308 or the NEF 302. The TSCTSF 312 provides the TSC assistance container to the PCF 305 for IP- and Ethernet-type PDU sessions.

Here, the information provided from the AF 308 or the NEF 302 includes, for example, a flow direction, a maximum burst size, and a periodicity of a data burst.

In addition, in a case of a downlink flow direction, the information provided from the AF 308 or the NEF 302 optionally includes, for example, a burst arrival time, a survival time, and a time domain in the UPF 330/NW-TT 52.

In a case of an uplink flow direction, the information provided from the AF 308 or the NEF 302 optionally includes, for example, a burst arrival time, a survival time, and a time domain in the UE 10/DS-TT 51.

Here, the time domain is 5GS, TSN, PTP, or the like corresponding to a GM clock. When no time domain is provided, the TSCTSF 312 configures 5GS as a time domain for the TSC assistance container. Note that the TSC assistance container includes information necessary for generating the TSC assistance information.

The TSC assistance container includes a burst arrival time. This burst arrival time is defined as a time for a first packet of a data burst to reach an input port of 5GS. The input port of 5GS is, for example, the UPF 330/NW-TT 52 in a case of a downlink flow direction, and the UE 10/DS-TT 51 in a case of an uplink flow direction.

In a case of integration with TSN conforming to IEEE, the TSN AF 308 generates the TSC assistance container. In this case, the TSN AF 308 provides the TSC assistance container to the PCF 305 for an Ethernet type PDU session.

The PCF 305 acquires the TSC assistance container from the TSCTSF 312 or the TSN AF 308. The PCF 305 transfers the TSC assistance container to the SMF 306 as a part of a policy and charging control (PCC) rule.

Here, the PCC rule is an information set including at least one of information that enables detection of a service data flow, information that provides parameters for policy control, charging control, and/or other control, and support information.

The SMF 306 associates the PCC rule including the TSC assistance container with a QoS flow. The SMF 306 acquires TSC assistance information for the QoS flow using the TSC assistance container. The SMF 306 transmits the acquired TSC assistance information to the NG-(R)AN 20.

Here, a periodicity a data burst, a burst arrival time, and a survival time of a data burst, which are elements of the TSC assistance information, are specified by the SMF 306 with reference to a 5G clock. The SMF 306 associates the burst arrival time and the periodicity of the data burst with the 5G clock from an external clock on the basis of a time offset between the 5G clock and the external clock measured and reported by the UPF 330, and a cumulative rate ratio.

<3.4. QoS control of 5GS>

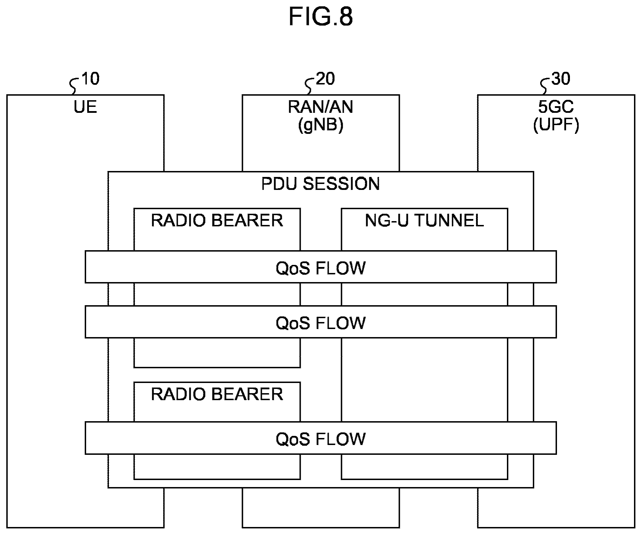

FIG. 8 is a diagram illustrating an example of a QoS architecture of 5GS. This drawing is on the basis of the drawing described in the literature "3GPP TS38.300".

At a non-access stratum (NAS) level, a QoS flow has the finest granularity in distinguishing different QoSs from each other in a protocol data unit (PDU) session. Within the PDU session, the QoS flow is identified by a QoS flow ID (QFI).

In addition, in extended reality (XR) or a media service, a group of packets is transmitted using a payload of a PDU set. The PDU set includes one or more PDUs that transmit a payload of an information unit generated at an application level. Examples of the information unit include an image frame, a video slice of XR or a media service, and an I frame, a P frame, and a B frame of video data in a group of picture (GOP) format. Furthermore, in a multimodal application that handles a plurality of types of data, such as XR, each of the plurality of types of data (for example, pose information, audio information, and image information) may be an information unit.

That is, a packet in the PDU set is treated as a unit of data to be received and decoded within a certain period. For example, decoding may be performed only when all packets that transmit an image frame or a video slice or a certain amount of packets are successfully received. For example, an image frame in GOP can be decoded only when all image frames having a dependency are successfully received.

In the QoS flow with the finest granularity in terms of QoS control, 5GS can identify data with finer granularity by the PDU set. 5GS can apply QoS control at a PDU set level in addition to QoS control at a QoS flow level.

The SMF 306 associates a PCC rule with the QoS flow on the basis of QoS and a service request. The SMF 306 assigns QFI to a new QoS flow, and acquires a PCC rule and other information associated with the QoS flow from the PCF 305.

The SMF 306 acquires a QoS profile of the QoS flow, an instruction regarding a corresponding UPF 330 (for example, an N4 rule), and a QoS rule from the PCC rule.

The base station (gNB) of the (R)AN 20 can establish at least one data radio bearer (DRB) with each UE 10 together with the PDU session. The DRB is a logical path for transmitting data.

In the QoS model of 5G, a guaranteed flow bit rate (GBR) in which a band is guaranteed and a non-guaranteed flow bit rate (Non-GBR) in which a band is not guaranteed are supported. Furthermore, for a TSC QoS flow, Delay-critical GBR is supported.

The (R)AN 20 and the 5GC 30 guarantee service quality by mapping each packet to an appropriate QoS flow and DRB. That is, two-stage mapping of mapping between an IP flow and a QoS flow in NAS and mapping between a QoS flow and DRB in AS is performed.

At a NAS level, the QoS flow is characterized by a QoS profile provided from the 5GC 30 to the (R)AN 20 and a QoS rule provided from the 5GC 30 to the UE 10.

The QoS profile is used by the (R)AN 20 to determine a processing method on a wireless interface. The QoS rule is used to instruct the UE 10 to perform mapping between traffic of a user plane in an uplink and the QoS flow.

Therefore, for a multicast/broadcast service (MBS) session, a QoS rule of an MBS QoS flow and a QoS parameter at a QoS flow level are not provided to the UE 10.

The QoS profile is provided from the SMF 306 via the AMF 301 and the reference point N2 to the (R)AN 20 or is set in advance in the (R)AN 20.

In addition, the SMF 306 can provide one or more QoS rules and, if necessary, a QoS parameter at a QoS flow level related to the QoS rule to the UE 10 via the AMF 301 and the reference point N1.

In addition to or instead of this, reflective QoS control can be applied to the UE 10. The reflective QoS control is QoS control that monitors QFI of a downlink packet and applies the same mapping to an uplink packet.

The QoS flow becomes a GBR QoS flow or a non-GBR QoS flow depending on a QoS profile. The QoS profile of the QoS flow includes, for example, QoS parameters such as a 5G QoS Identifier (5QI) and an allocation and retention priority (ARP).

The ARP includes information regarding a priority level, pre-emption capability, and pre-emption vulnerability.

The priority level defines relative importance of the QoS flow. The smallest value of the priority level indicates the highest priority level.

The pre-emption capability is an indication that defines whether or not a certain QoS flow can deprive a resource already assigned to another QoS flow with a lower priority level. The pre-emption vulnerability is an index that defines whether or not a certain QoS flow can vacate a resource assigned thereto to another QoS flow with a higher priority level.

Either "enabled" or "disabled" is set for the pre-emption capability and the pre-emption vulnerability.

In the GBR QoS flow, the QoS profile includes:

uplink and downlink GFBRs;
uplink and downlink maximum flow bit rates (MFBRs);
uplink and downlink maximum packet loss rates;
delay critical resource type;
notification control;

and the like.

In the non-GBR QoS flow, the QoS profile includes a reflective QoS attribute (RQA), additional QoS flow information, and the like.

The notification control of the QoS parameter indicates whether or not notification from the (R)AN 20 is requested when a certain QoS flow cannot satisfy a GFBR. For a certain GBR QoS flow, when the notification control is "enabled" and it is determined that the GFBR cannot be satisfied, the (R)AN 20 transmits a notification indicating this to the SMF 306.

At this time, unless the (R)AN 20 is in a special state of requesting release of a RAN resources of the GBR QoS flow, the (R)AN 20 should maintain the QoS flow. Examples of the special state include radio link failure and RAN internal congestion.

When it is determined that the GFBR is satisfied again for the QoS flow, the (R)AN 20 transmits a new notification indicating this to the SMF 306.

An aggregate maximum bit rate (AMBR) is related to a session-AMBR of each PDU session and a UE-AMBR of each UE 10. The session-AMBR restricts an aggregate bit rate expected to be provided across all non-GBR QoS flows for a specific PDU session and is managed by the UPF 330.

The UE-AMBR restricts an aggregate bit rate expected to be provided across all non-GBR QoS flows for a certain UE 10 and is managed by the (R)AN 20.

In addition, a slice maximum bit rate (S-MBR) related to a network slice (S-NSSAI) may be set in each UE 10. S-MBR may be included in contractor information as subscribed UE-slice-MBR.

UE-slice-MBR restricts an aggregate bit rate that is expected to be provided across all GBRs that belong to all PDU sessions that the UE 10 establishes for the same network slice (S-NSSAI) and a QoS flow of non-GBR.

The (R)AN 20 receives UE-slice-MBR corresponding to the network slice (S-NSSAI) from the AMF 301. The (R) AN 20 sets session-AMBR and MFBR for the UE 10 such that a sum of session-AMBRs of all PDU sessions belonging to this network slice (S-NSSAI) and MFBRs of GBR QoS flows is UE-slice-MBR.

5QI relates to QoS features and provides a policy for setting a node-specific parameter to each QoS flow. Standardized or preset QoS features of 5G can be found from 5QI, and no explicit signaling is performed. Signaled QoS features can be included as part of the QoS profile.

The QoS features include information regarding a resource type, a priority, a packet delay budget, a packet error rate, an averaging window, a maximum data burst volume, and the like.

The resource type is a GBR QoS flow, a non-GBR QoS flow, or a Delay-critical GBR flow. The packet delay budget may include a packet delay budget in the 5GC 30.

At an AS level, the DRB defines a packet processing method at a wireless interface (Uu interface). The DRB provides the same packet transfer processing to any packet.

The (R)AN 20 maps the QoS flow to the DRB on the basis of QFI and a QoS profile set in the QFI. The (R)AN 20 can establish different DRBs for packets requesting different types of packet transfer processing (see FIG. 8).

In addition, the (R)AN 20 can also multiplex a plurality of QoS flows belonging to the same PDU session into the same DRB (see FIG. 8).

In an uplink, mapping of a QoS flow to a DRB is controlled by a mapping rule signaled by two different methods.

One method is a method called reflective mapping. In the reflective mapping, the UE 10 monitors QFI of a downlink packet for each DRB and applies the same mapping to an uplink packet.

The other method is a method called explicit configuration. In the explicit configuration, the mapping rule of the QoS flow to the DRB is explicitly signaled by radio resource control (RRC).

In a downlink, QFI is signaled on the Uu interface by the (R)AN 20 for a reflective quality of service (RQoS). However, neither the (R)AN 20 nor the NAS signals QFI for a certain DRB on the Uu interface unless the (R)AN 20 and the NAS use the reactive mapping for the QoS flow carried in the DRB.

In an uplink, the (R)AN 20 can set to signal QFI toward the UE 10 on the Uu interface. In addition, the (R)AN 20 can set a default DRB for each PDU session. When an uplink packet adapts to neither the explicit configuration nor the reactive mapping, the UE 10 maps the packet to the default DRB of the PDU session.

For the non-GBR QoS flow, the 5GC 30 may transmit an additional QoS flow information parameter related to any QoS flow to the (R)AN 20. This is performed in order to give an instruction for increasing a frequency of certain traffic relative to another non-GBR QoS flow in the same PDU session.

How to map a plurality of QoS flows in a PDU session to one DRB depends on the (R)AN 20. For example, the (R)AN 20 may map a GBR QoS flow and a non-GBR QoS flow to the same DRB or to different DRBs. In addition, the (R)AN 20 may map a plurality of GBR QoS flows to the same DRB or to different DRBs.

In the 5G NR, a service data adaptation protocol (SDAP) sublayer is newly introduced for QoS control via a QoS flow. By the SDAP sublayer, traffic of a QoS flow is mapped to an appropriate DRB. The SDAP sublayer can have a plurality of SDAP entities. The SDAP sublayer has an SDAP entity for each PDU session on the Uu interface. The SDAP entity is established or released by the RRC.

The QoS flow is identified by QFI in a PDU session container included in a GPRS tunneling protocol (GTP)-U header. The PDU session is identified by a GTP-U tunnel endpoint ID (TEID). The SDAP sublayer maps each QoS flow to a specific DRB.

When receiving a QoS monitoring request from the AF 308, the PCF 305 can generate an authorized QoS monitoring policy and provide the QoS monitoring policy to the SMF 306 by adding the QoS monitoring policy to the PCC rule.

The SMF 306 can activate end-to-end uplink (UL)/downlink (DL) packet delay measurement between the UE 10 and the PSA-UPF 330 for a QoS flow during a PDU session establishment procedure or a PDU session modification procedure.

The SMF 306 transmits a QoS monitoring request to the UPF 330 via the reference point N4, and transmits N2 signaling in order to request QoS monitoring between the UPF 330 and the (R)AN 20.

The SMF 306 requests QoS monitoring on the basis of the QoS monitoring policy received from the PCF 305 or the authorized QoS monitoring policy locally set in advance. The QoS monitoring request includes a monitoring variable determined by the SMF 306.

The (R)AN 20 measures a delay of a UL/DL packet in the (R)AN 20 portion and provides the measured value to the UPF 330 via a reference point N3.

The UPF 330 calculates a delay of the UL/DL packet at the reference point N3 or N9. The UPF 330 transmits the QoS monitoring result to the SMF 306 on the basis of a predetermined condition. Here, the predetermined condition is, for example, only once, periodically, or an event trigger.

In addition, the UPF 330 can support transmission of the QoS monitoring result to the AF 308 via the locally located NEF 302. Here, the QoS monitoring result is, for example,

- a measurement result of a bit rate (for example, an average bit rate or a maximum bit rate) of each GBR QoS flow of a target PDU session,
- a measurement result of an aggregate bit rate of all non-GBR QoS flows of a target PDU session,
- a measurement result of a packet error rate of a target PDU session,
- a measurement result of an aggregate bit rate of all non-GBR QoS flows of a target UE 10,
- a measurement result of a packet error rate of a target UE 10, or
- a measurement result of a delay of a UL/DL packet.

The delay of the UL/DL packet is a delay including the delay of the UL/DL packet in the (R)AN 20 portion acquired from the (R)AN 20 and a delay of the UL/DL packet at the reference point N3 or N9.

In addition, when the PDU session is a session via a TSN bridge, a packet delay budget for a TSC QoS flow is a sum of a 5G-AN packet delay budget (PDB) and a core network (CN) PDB.

The above-described QoS monitoring mechanism can also be applied to the TSC QoS flow for measurement of a bit rate (for example, an average bit rate or a maximum bit rate) between the UE 10 and the PSA-UPF 330 and end-to-end UL/DL packet delay measurement.

The TSC QoS flow uses a resource type of Delay-critical GBR and the TSC assistance information. The TSC QoS flow can use a standardized 5QI value, a preset 5QI value, or a dynamically assigned 5QI value.

For the TSC QoS flow, it is required to transmit one data burst with a maximum data burst volume in 5G-AN PDB. A TSC burst size is used to set the maximum data burst volume. The maximum TSC burst size is treated as the maximum volume of data within a period equal to a value of 5G-AN PDB for 5QI. A maximum value of the TSC burst size is mapped to 5QI with a maximum data burst volume equal to or larger than the maximum value of the TSC burst size.

In addition, a PDU set delay budget (PSDB) and a PDU set error rate (PSER) may be applied to the PDU set.

The PDU set delay budget defines an upper limit of a delay that occurs when the PDU set is transmitted between the UE 10 and an end point of an N6 interface of the UPF 330. That is, the PDU set delay budget is a time from when the first PDU of the PDU set is received to when the last arriving PDU is successfully transmitted.

The PDU set error rate defines an upper limit of a ratio of a PDU set not successfully received in an upper layer (for example, a PDCP sublayer of the RAN 20) to a PDU set processed in a link layer (for example, an RLC sublayer of the RAN 20). For a GBR QoS flow with a Delay-critical GBR resource type, a PDU set that is delayed beyond the PDU set delay budget is counted as a lost one and included in the PDU set error rate unless the QoS flow exceeds GFBR.

<3.5. Mechanism of Hold and Forward>

When 5GS is integrated with TSN to operate as a bridge, the DS-TT 51 and the NW-TT 52 support a mechanism of Hold and Forward for scheduled traffic, that is, in deterministic communication.

The mechanism of Hold and Forward is, for example, a mechanism of priority control of traffic using a maximum of eight queues in which a protected window conforming to IEEE Std 802.1Q is set.

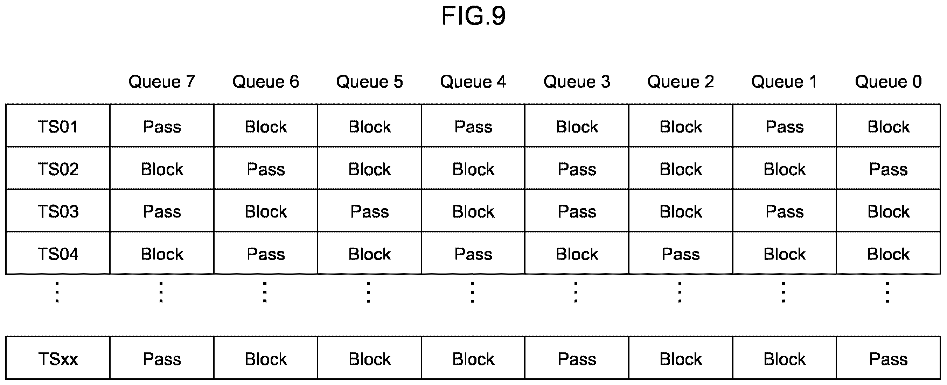

FIG. 9 is a diagram illustrating an example of configuration of each queue for each time slot to be subjected to gate control.

For example, the DS-TT 51 and the NW-TT 52 set a period of each time slot and whether to cause data of each queue to pass or block the data of each queue at a gate for each time slot using a gate control list. That is, the DS-TT 51 and the NW-TT 52 can control availability of communication of each queue for each time slot.

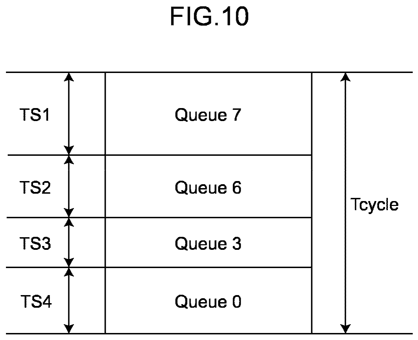

FIG. 10 is a diagram illustrating an example of configuration of a time slot that controls availability of communication. Here, an example of a state in which the UPF 330 to be controlled processes traffic assigned to a queue 7, a queue 6, a queue 3, and a queue 0 is illustrated.

The SMF 306 or the TSCTSF 312 generates a gate control list according to a policy acquired from the PCF 305.

As illustrated in FIG. 10, the SMF 306 or the TSCTSF 312 assigns time slots (TS1, TS2, TS3, and TS4) to the queue 7, the queue 6, the queue 3, and the queue 0, respectively, within a Tcycle of the gate control.

The NW-TT 52 connected to the UPF 330 (or the NW-TT 52 disposed as a function in the UPF 330) acquires the gate control list from the SMF 306 or the TSCTSF 312. The NW-TT 52 controls user plane data transfer processing in the UPF 330.

The UPF 330 processes transfer of data assigned to the queue 7 within a period of TS1 at a head of one Tcycle of the gate control. The UPF 330 processes transfer of data assigned to the queue 6 within the subsequent period of TS2. The UPF 330 processes transfer of data assigned to the queue 3 within the period of TS3. The UPF 330 processes transfer of data assigned to the queue 0 within the period of TS4. In this manner, the UPF 330 sequentially processes transfer of data assigned to each queue.

The SMF 306 or the TSCTSF 312 generates one gate control list for traffic of the same Tcycle. In addition, if a plurality of Tcycles has an integral multiple relationship, one gate control list can be generated for traffic of a plurality of different Tcycles.

Alternatively, the SMF 306 or the TSCTSF 312 may generate a gate control list for each piece of traffic of a plurality of different Tcycles. When generating a plurality of gate control lists, the SMF 306 may assign a UPF 330 that varies depending on a gate control list. That is, each UPF 330 can control user plane data transfer processing according to one gate control list.

Furthermore, when a plurality of UPFs 330 are assigned to a plurality of gate control lists, respectively, the SMF 306 may divide a transport layer for connection between each UPF 330 and the RAN 20. In this case, the SMF 306 can assign an identifier to a divided transport layer.

A gate control list and an identifier of a transport layer are mapped to a session established between each UPF 330 and the RAN 20, for example, a PDU session.

<3.6. Configurations of SPS and CG>

The base station (for example, gNB) constituting the RAN 20 can configure SPS-Config and ConfiguredGrant-Config in the terminal device (for example, UE 10) via RRC. For example, the base station configures SPS-Config and ConfiguredGrantConfig in the terminal device by transmitting an RRCReconfiguration message including SPS-Config and ConfiguredGrantConfig.

SPS-Config is used to configure downlink semi-persistent transmission. A plurality of SPSs can be configured for one bandwidth part (BWP) of a serving cell. The plurality of SPSs is configured in SPS-ConfigList. Alternatively, one or more SPS configurations are added and modified using sps-ConfigToAddModList.

In addition, the base station 20 can configure two types of ConfiguredGrantConfig in the terminal device 10.

In a type 1 configured grant (CG), an uplink grant is provided by RRC. The uplink grant is held as configured uplink grant.

In a type 2 CG, the uplink grant is provided by PDCCH. The uplink ground is held or released as configured uplink grant on the basis of L1 signaling for instructing activation or deactivation of configured uplink grant.

The type 1 and type 2 CGs are configured for each BWP by RRC with respect to a serving cell. The base station 20 can simultaneously configure a plurality of CGs for the same BWP.

The activation and the deactivation in type 2 can be independently controlled among a plurality of serving cells. For the same BWP, a MAC entity can configure both type 1 and type 2.

An SPS-Config information element included in the RRC message includes fields of a periodicity, periodicityExt, and sps-ConfigIndex.

Here, when periodicityExt is not included in the SPS-Config information element, the terminal device 10 refers to the periodicity. When periodicityExt is included, the terminal device 10 ignores the periodicity.

The literature "3GPP TS 38.331" defines values of 10 ms, 20 ms, 32 ms, 40 ms, 64 ms, 80 ms, 128 ms, 160 ms, 320 ms, and 640 ms as a periodicity of SPS-Config.

In addition, regarding periodicityExt of SPS-Config, definition is made such that any number of slots between 1 slot and 640 slots can be set as periodicityExt when subcarrier spacing (SCS) is 15 kHz. In addition, when the SCS is 30 kHz, definition is made such that any number of slots between 1 slot and 1280 slots can be set as periodicityExt.

When the SCS is 60 kHz, definition is made such that any number of slots between 1 slot and 2560 slots can be set as periodicityExt. When the SCS is 120 kHz, definition is made such that any number of slots between 1 slot and 5120 slots can be set as periodicityExt.

When SPS is configured, the MAC entity needs to determine that resource assignment for the Nth downlink in succession occurs in a slot satisfying the following formula (1):

$$(\text{numberOfSlotsPerFrame} * \text{SFN} + \text{slot number in the frame})$$
$$= [(\text{numberOfSlotsPerFrame} * \text{SFN}_{\text{start time}} + \text{slot}_{\text{start time}})$$
$$+ N * \text{periodicity}$$
$$* \text{numberOfSlotsPerFrame}/10] \text{modulo}(1024$$
$$* \text{numberOfSlotsPerFrame})$$

$$\cdots (1)$$

Here, numberOfSlotsPerFrame is the number of slots in a radio frame (for example, 10 when SCS is 15 kHz). $\text{SFN}_{\text{start time}}$ is SFN of the first transmission of a physical downlink shared channel (PDSCH) in which SPS is configured or reconfigured. $\text{Slot}_{\text{start time}}$ is a slot for the first transmission of a physical downlink shared channel (PDSCH) in which SPS is configured or reconfigured.

In addition, a parameter of numberOfSlotsPerSPS may be further introduced in order to continuously assign a plurality of slots as resources of the SPS on a time axis. The MAC entity determines that Nth downlink resource assignment in continuous slots corresponding to numberOfSlotsPerSPS with a slot satisfying the above formula (1) as a head occurs.

Alternatively, in order to assign a plurality of slots as resources of SPS discontinuously on the time axis, the MAC entity sets a slot interval and the number of slots with a slot satisfying the above formula (1) as a head. Here, the MAC entity may set a plurality of continuous slots by setting the slot interval to 0.

Alternatively, the MAC entity can assign a plurality of slots as resources of SPS discontinuously on the time axis by setting a sequence including relative slot positions from a head slot satisfying the above formula (1).

Alternatively, the MAC entity may define a plurality of patterns of slots of SPS assigned in a certain period, for example, a frame, with a slot satisfying the above formula (1) as a head, and set an identifier for identifying the patterns.

Note that the MAC entity may provide the sequence and the identifier while the sequence and the identifier are included in timeDomainAllocation of downlink control information (DCI). The sequence includes the number of continuously assigned slots (numberOfSlotsPerSPS), a slot interval, the number of slots, and a relative slot position from a head slot. The identifier is identification information for identifying a slot pattern of SPS.

The ConfiguredGrantConfig information element included in the RRC message includes fields of a periodicity, periodicityExt, and ConfiguredGrantConfigIndex.

Here, the terminal device 10 refers to the periodicity when periodicityExt is not included in the ConfiguredGrantConfig information element, and ignores the periodicity when periodicityExt is included.

The literature "3GPP TS38.331" defines 2, 7, and n*14 symbols, for example, when SCS is 15 kHz as a periodicity of ConfiguredGrantConfig. Here, n is any value of 1, 2, 4, 5, 8, 10, 16, 20, 32, 40, 64, 80, 128, 160, 320, and 640.

In addition, regarding periodicityExt of ConfiguredGrantConfig, definition is made such that any number of symbols between 1 symbol and 640 symbols can be set as periodicityExt, for example, when SCS is 15 kHz. In addition, a periodicity of periodicityExt*14symbols can be set.

When an uplink grant for type 1 CG is configured, the MAC entity needs to determine that an Nth uplink grant in succession occurs in a symbol satisfying the following formula (2):

$$
\begin{aligned}
[(\text{SFN} &\times \text{numberOfSlotsPerFrame} * \text{numberOfSymbolsPerSlot}) \\
&+ (\text{slot number in the frame} * \text{numberOfSymbolsPerSlot}) \\
&+ \text{symbol number in the slot}] \\
&= (\text{timeReferenceSFN} * \text{numberOfSlotsPerFrame} \\
&\quad * \text{numberOfSymbolsPerSlot} + \text{timeDomainOffset} \\
&\quad * \text{numberOfSymbolsPerSlot} + S + N * \text{periodicity}) \text{modulo}(1024 \\
&\quad * \text{numberOfSlotsPerFrame} * \text{numberOfSymbolsPerSlot})
\end{aligned}
$$

$$\cdots (2)$$

Here, numberOfSlotsPerFrame is the number of slots in a radio frame (for example, 10 when SCS is 15 kHz). numberOfSymbolsPerSlot is the number of symbols in a slot (14 in a case of Normal CP). TimeReferenceSFN is SFN used to determine an offset of a resource in a time domain.

TimeDomainOffset is an offset of a resource related to SFN corresponding to timeReferenceSFN. S, which is a start symbol, is a parameter acquired from a start and length indicator value (SLIV) or provided by startSymbol. The SLIV or startSymbol is included in timeDomainAllocation. TimeReferenceSFN, timeDomainOffset, and timeDomainAllocation are configured by RRC.

When an uplink grant for type 2 CG is configured, the MAC entity needs to determine that an Nth uplink grant in succession occurs in a symbol satisfying the following formula (3):

$$[(\text{SFN} * \text{numberOfSlotsPerFrame} * \text{numberOfSymbolsPerSlot})$$

$$+ (\text{slot number in the frame} * \text{numberOfSymbolsPerSlot})$$

$$+ \text{symbol number in the slot}]$$

$$= [(\text{SFN}_{\text{start time}} * \text{numberOfSlotsPerFrame} * \text{numberOfSymbolsPerSlot}$$

$$+ \text{slot}_{\text{start time}} * \text{numberOfSymbolsPerSlot} + \text{symbol}_{\text{start time}})$$

$$+ N * \text{periodicity}] \text{modulo}(1024$$

$$* \text{numberOfSlotsPerFrame} * \text{numberOfSymbolsPerSlot})$$

$$\cdots (3)$$

Here, the $\text{SFN}_{\text{start time}}$ is SFN of a first transmission opportunity of a physical uplink shared channel (PUSCH) in which an uplink grant of CG is configured or reconfigured. The $\text{slot}_{\text{start time}}$ is a slot of a first transmission opportunity of PUSCH in which an uplink grant of CG is configured or reconfigured. The symbolstart time is a symbol of a first transmission opportunity of PUSCH in which an uplink grant of CG is configured or reconfigured.

In addition, a parameter of numberOfSymbolsPerCg may be further introduced in order to continuously assign a plurality of symbols as resources of CG on the time axis. The MAC entity determines that an Nth uplink grant of symbols corresponding to numberOfSymbolsPerCg with a symbol satisfying the above formula (2) or (3) as a head occurs.

Alternatively, when providing SLIV, the MAC entity can notify the UE 10 of the number of symbols to be continuously assigned on the time axis using L.

Alternatively, in order to discontinuously assign a plurality of symbols on the time axis as resources of CG, the MAC entity sets a symbol interval and the number of symbols with a symbol satisfying the above formula (2) or (3) as a head. Here, the MAC entity may set a plurality of continuous symbols by setting the symbol interval to 0.

Alternatively, the MAC entity can assign a plurality of symbols as resources of CG discontinuously on the time axis by setting a sequence including relative symbol positions from a head symbol satisfying the above formula (2) or (3).

Alternatively, the MAC entity may define a plurality of patterns of symbols of CG assigned in a certain period, for example, a slot, with a symbol satisfying the above formula (2) or (3) as a head, and set an identifier for identifying the patterns.

Note that the MAC entity may provide the sequence and the identifier while the sequence and the identifier are included in timeDomainAllocation of DCI. The sequence includes the number of continuously assigned slots (number-OfSymbolsPerCg), a slot interval, the number of slots, and a relative slot position from a head slot. The identifier is identification information for identifying a symbol pattern of CG.

<<4. Technical features>>

<4.1. Technical feature 1>

[Transmission example of data burst]

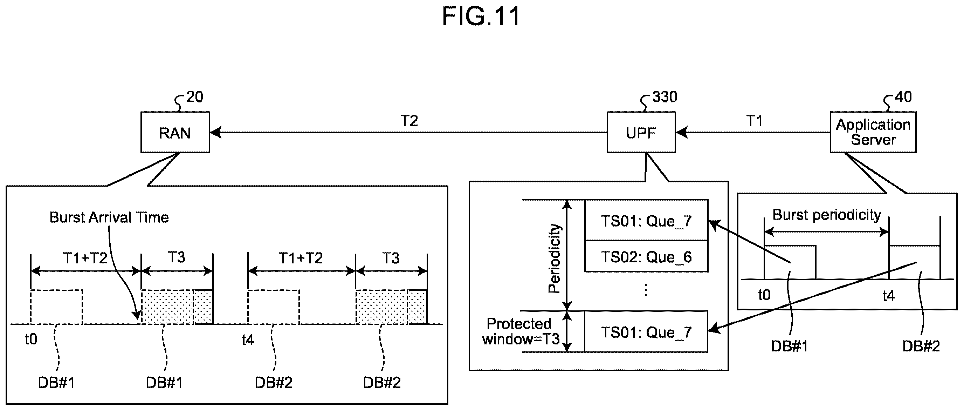

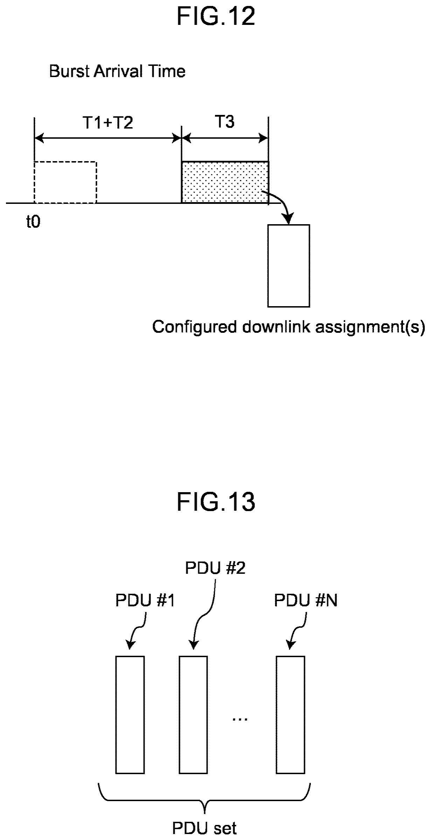

FIGS. 11 and 12 are diagrams illustrating an example (downlink) of transmission of a scheduled data burst DB in 5GS according to the embodiment of the present disclosure. In this case, the RAN 20 receives the data burst DB (an example of received data) from the application server 40 via the UPF 330, and transmits the data burst DB to the UE 10.

Here, examples of the scheduled data burst DB include the following data:

Various contents for XR or 3D hologram display
Content generation information used for generating these contents
· Control information for controlling various apparatuses

Examples of the content generation information include sensor information, control information, and the above-described Sync message for synchronization, Follow_up message, and (g)PTP message.

The UE 10 transmits a PDU session establishment request to the RAN 20, which is a base station, in order to receive a scheduled periodic data burst DB. Here, the UE 10 may cause information identifying a network slice for receiving the scheduled periodic data burst DB to be included in the PDU session establishment request.

When the PDU session is established with the UE 10, the application server 40 generates the scheduled data burst DB according to information related to a traffic pattern of which 5GS is notified via the AF 308.

Here, the information related to the traffic pattern includes at least one of a periodicity of the data burst DB and the first burst arrival time, and the first survival time.

Here, the application server 40 or the AF 308 may set the first survival time including an allowable jitter with respect to a delay time generated in the core network 30 and an access network.

The application server 40 generates the data burst DB according to the information related to the traffic pattern. The application server 40 starts transmitting a first packet of a first data burst DB#1 at time t0. All packets of the first data burst DB#1 are transmitted during the first survival time. Note that, when the first survival time is set including the allowable jitter, the application server 40 performs control such that transmission of all packets of the data burst DB#1 is completed within a period excluding an influence of the allowable jitter.

Then, the application server 40 starts transmitting a first packet of a next data burst DB#2 at time t4 which is one periodicity after the data burst DB#1 from time t0. Like the first data burst DB#1, all packets of the data burst DB#2 are transmitted during the first survival time. Thereafter, the application server 40 continues transmission of the periodic data burst DB.

In the example of FIG. 11, a packet of the data burst DB transmitted from the application server 40 arrives at the UPF 330 with a delay T1.

When the AF 308 does not have information related to the delay T1 from the application server 40 to the UPF 330, the AF 308 provides the time t0 at which the first packet of the data burst DB#1 is transmitted from the application server 40 as the first burst arrival time.

When the AF 308 has the information related to the delay T1 from the application server 40 to the UPF 330, the AF 308 provides a time (time t0 + T1) at which the first packet of the data burst DB#1 arrives at an input of the UPF 330 as the first burst arrival time.

When the SMF 306 receives a PDU session establishment request from the UE 10, the TSCTSF 312 acquires information related to a traffic pattern from the AF 308 and generates a TSC assistance container. Here, the TSC assistance container includes a periodicity of the data burst DB, the first burst arrival time, and the first survival time.

The SMF 306 acquires the TSC assistance container from the TSCTSF 312 and generates TSC assistance information for a PDU session to be established. The SMF 306 generates a second burst arrival time defined as a time as late as possible for a first packet of the data burst DB#1 to reach an input of the RAN 20. Note that the SMF 306 considers that the first burst arrival time included in the TSC assistance container is a time (t0 + T1) at which the first packet of the data burst DB#1 arrives at an input of the UPF 330, and generates the second burst arrival time.

Here, the second burst arrival time is, for example, a time (t0 + T1 + T2) obtained by adding a delay T2 which is CN PDB of 5QI of a TSC QoS flow assigned to the data burst DB to the first burst arrival time. The generated TSC assistance information includes the second burst arrival time.

In addition, the SMF 306 generates a gate control list for priority control of traffic using the periodicity of the data burst DB, the first burst arrival time, and the first survival time included in the acquired TSC assistance container.

For example, the SMF 306 assigns the scheduled data burst DB to a queue (queue 7) with the highest priority level. The SMF 306 generates a gate control list including the following configurations:

· Period of a time slot that passes through this queue. This period is set so as to be equal to or shorter than the first survival time.
· Periodicity of this time slot. This periodicity is set to the periodicity of the data burst DB.
· Start timing of this time slot. This start timing is set to the first burst arrival time that is a time to arrive at an input of the UPF 330.

Here, the assignment of the data burst DB to a queue may be assignment of 5QI to which the data burst DB is assigned and a queue.

Hereinafter, a period of a time slot that passes through a queue to which the scheduled data burst DB is assigned will be referred to as a protected window. In addition, it is assumed that a period of the protected window is T3. When transfer of the data burst DB is controlled using a plurality of queues 0 to 7, the UPF 330 preferentially transfers the data burst DB using the queue 7 to which the data burst DB is assigned. A period during which the data burst DB is preferentially transferred is the period T3 of the protected window. The information related to the protected window is provided to the RAN 20 while being included in the TSC assistance information. Alternatively, the period of the protected window is provided to the RAN 20 while being included in the TSC assistance information as the first survival time.

The SMF 306 generates the generated gate control list to the UPF 330. The UPF 330 executes priority control of traffic for which the protected window is configured according to the acquired gate control list.

In the example of FIG. 11, the UPF 330 assigns the data burst DB#1 transmitted by the application server 40 to the queue 7 ("TS01: Que_7" in FIG. 11) and transfers the data burst DB#1 to the RAN 20. In addition, the UPF 330 assigns the data burst DB#2 transmitted by the application server 40 to the queue 7 ("TS01: Que_7" in FIG. 11) and transfers the data burst DB#2 to the RAN 20.

Note that the gate control list may be generated by the TSCTSF 312. In addition, the TSCTSF 312 generates the gate control list using the periodicity of the data burst DB, the first burst arrival time, and the first survival time included in the TSC assistance container.

The gate control list generated by the TSCTSF 312 is provided from the TSCTSF 312 to the UPF 330 via the SMF 306 or directly.

The SMF 306 provides TSC assistance information to the RAN 20 via the AMF 301.

The RAN 20 receives the scheduled data burst DB transmitted from the application server 40 via the UPF 330. Note that the UPF 330 executes priority control of traffic for which the protected window is configured.

Here, the first data burst DB#1 received by the RAN 20 is received within the period T3 of the protected window from the second burst arrival time included in the TSC assistance information. After receiving the data burst DB#1, the RAN 20 receives the subsequent data burst DB#2 in the periodicity of the data burst DB. As described above, the data burst DB received by the RAN 20 is specified by the arrival time (second burst arrival time), the periodicity, and the protected window of the data burst DB included in the TSC assistance information.

As illustrated in FIG. 12, the base station (for example, gNB) constituting the RAN 20 configures semi-persistent scheduling (SPS) on the basis of the acquired TSC assistance information (an example of assignment of a radio resource). For example, the base station 20 determines SPS on the basis of at least one of the arrival time (second burst arrival time), the periodicity, and the protected window of the data burst DB included in the TSC assistance information, and transmits SPS-Config to the terminal device 10 to configure SPS.

The base station 20 transmits a data burst DB (an example of received data) scheduled using a radio resource (configured downlink assignment) assigned as SPS to the UE 10.

Here, the base station 20 configures SPS based on a maximum data burst volume with reference to a timing (t0 + T1 + T2 + T3) (hereinafter, also referred to as a reference timing) obtained by adding the period T3 of the protected window to the second burst arrival time. The reference timing (t0 + T1 + T2 + T3) can be treated as a time when the base station 20 has completed reception of the first data burst DB#1.

For example, the base station 20 sets a periodicity of the data burst DB to the periodicity of SPS-Config information element or periodicityExt according to formula (1). The base station 20 assigns PDSCH including a part or a whole of the first packet of the first data burst DB#1 to an SFN slot having the smallest difference from a reference timing after the reference timing. That is, this slot is a $slot_{start\ time}$ of $SFN_{start\ time}$.

In BWP to which the data burst DB is assigned, there may be a case where the base station 20 cannot assign a maximum data burst volume in a slot satisfying formula (1). In this case, the base station 20 may assign some of the data bursts DB to radio resources configured by SPS, and may assign the remaining data burst DBs to radio resources by dynamic scheduling.

Alternatively, when the maximum data burst volume cannot be assigned in a slot satisfying formula (1), the base station 20 assigns a plurality of slots to SPS. For example, the base station 20 sets the number of slots necessary for assigning the maximum data burst volume as numberOfSlotsPerSPS described above. Alternatively, the base station 20 configures a plurality of SPSs corresponding to the number of slots necessary for assigning the maximum data burst volume.

Here, the base station 20 may determine whether to configure numberOfSlotsPerSPS or to configure a plurality of SPSs on the basis of capability of the terminal device 10. The capability of the terminal device 10 is, for example, a release (release 16, release 17, or the like) supported by the terminal device 10.

Note that the SMF 306 sets the period T3 and the SPS configured downlink assignment(s) such that a sum of the period T3 of the protected window and a period of the configured downlink assignment(s) in which one or more SPS configurations are made is within the first survival time.

The base station 20 transmits the data burst DB scheduled using the configured downlink assignment(s) of the configured SPS to the terminal device 10.

[PDU set]

Here, the data burst DB may be data in a PDU set format. The AF 308 requests the 5GC 30 to configure a PDU set for the data burst DB in order to set different priorities within the same QoS flow. The AF 308 can give an instruction to configure a PDU set for traffic of XR content that is, for example, video data in a group of picture (GOP) format including an I frame, a P frame, and/or a B frame.

The I frame is also referred to as a key frame. One complete image is reproduced only with data of the I frame.

The P frame includes prediction data of how a next frame changes from a previous frame. By referring to information of the immediately preceding frame in addition to the P frame, one image is reproduced.

The B frame includes data predicted from previous and subsequent frames. By referring to information of the previous and subsequent frames in addition to the B frame, one image is reproduced.

In this manner, by using video data in the GOP format, the data volume of the video data can be reduced, that is, compressed. One GOP includes one I frame as a key frame.

The AF 308 provides, via the NEF 302, information instructing to configure the PDU set for the data burst DB as information related to a traffic pattern and/or information related to configuration of the PDU set to a network function of the 5GC 30. The network function is, for example, the TSCTSF 312 or the PCF 305.

Here, the information related to the configuration of the PDU set includes, for example, the number of PDUs constituting the PDU set and information indicating a relationship between the PDU set and the data burst DB.

FIGS. 13 to 15 are diagrams illustrating a correspondence between a configuration of the PDU set according to the embodiment of the present disclosure and the data burst DB.

As illustrated in FIG. 13, the PDU set includes N PDUs. Each PDU constituting the PDU set is identified in the PDU set by an identifier.

Information indicating the relationship between the PDU set and the data burst DB includes information instructing whether to assign one PDU set to one data burst DB or to assign each PDU in one PDU set to one data burst DB. For example, the information indicating the relationship between the PDU set and the data burst DB is the number of data burst DBs for one PDU set.

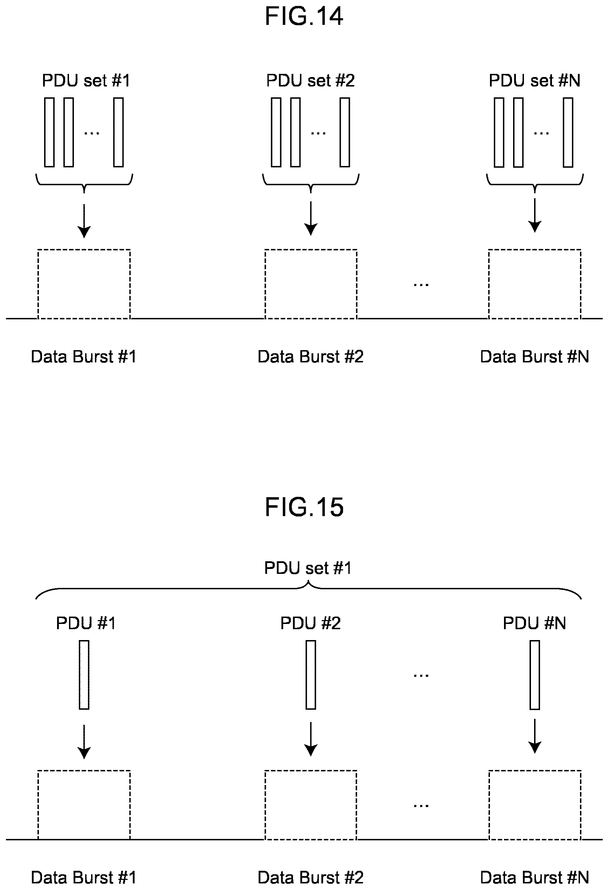

FIG. 14 illustrates a case where the number of data burst DBs for one PDU set is 1. In this case, the 5GC 30 assigns one PDU set to one data burst DB.

In the example of FIG. 14, the PDU set #n is assigned to the data burst #n. Note that n is a natural number from 1 to N.

Furthermore, the 5GC 30 may configure a plurality of PDU sets for one data burst DB. When a plurality of PDU sets is configured, an identifier is assigned to each PDU set, and each PDU set can be identified.

FIG. 15 illustrates a case where the number of data burst DBs for one PDU set is N. Here, N is, for example, the number of PDUs constituting the PDU set. In this case, the 5GC 30 assigns each PDU constituting the PDU set to each data burst DB.

In the example of FIG. 15, the PDU #n of the PDU set #1 is assigned to the data burst #n. Note that n is a natural number from 1 to N.

The AF 308 can request a network function (for example, the TSCTSF 312, the PCF 305, or the SMF 306) of the 5GC 30 to set the number of PDUs configured for one PDU set, the number of data burst DBs, and the number of PDU sets set for one data burst DB.

The AF 308 acquires the number of data burst DBs set in one PDU set from the 5GC 30. If the number of data burst DBs for one PDU set is one (FIG. 14), the AF 308 further acquires the number of PDUs set for one PDU set.

The AF 308 assigns information of any one of the I frame, the P frame, and the B frame constituting one GOP to each PDU constituting one PDU set assigned to one data burst DB according to the acquired number of PDUs. That is, one GOP is transmitted using one data burst DB.

In addition, when a plurality of PDU sets is configured for one data burst DB, for example, the AF 308 assigns information of any one of the I frame, the P frame, and the B frame constituting one GOP to each PDU set. In addition, the AF 308 assigns one PDU set to which any one of the I frame, the P frame, and the B frame is assigned from among the plurality of PDU sets to each data burst DB. That is, one GOP is transmitted using a plurality of data bursts DB. Here, data of the I frame, the P frame, or the B frame is assigned to a plurality of PDUs of each assigned PDU set.

Alternatively, it is assumed that the number of the acquired data bursts DB is N (for example, the number of PDUs constituting the PDU set) (FIG. 15). In this case, the AF 308 assigns information of any one of the I frame, the P frame, and the B frame constituting one GOP to each data burst DB to which each PDU constituting one PDU set is assigned. That is, one GOP is transmitted using a plurality of data bursts DB.

In addition, the AF 308 can request a network function (for example, the TSCTSF 312 or the PCF 305) of the 5GC 30 to set a relative priority to each PDU packet constituting the PDU set.

When receiving the request from the AF 308, the network function (for example, the TSCTSF 312 or the PCF 305) of the 5GC 30 sets a relative priority to each PDU included in the PDU set.

The base station 20 assigns SPS to PDU with a higher priority in the PDU set when a relative priority is set to each PDU constituting the PDU set.

For example, when video data in a GOP format is XR content, the AF 308 performs control so to assign the I frame to PDU with a higher priority in the PDU set. As a result, the base station 20 can assign SPS to the I frame.

On the other hand, the AF 308 performs control to assign the P frame or the B frame to PDU with a lower priority. The base station 20 assigns a radio resource by dynamic scheduling to the P frame or the B frame.

Furthermore, when a plurality of SPSs is configured, the base station 20 assigns SPS configured in an earlier slot from among the plurality of SPSs to PDU with the highest priority in the PDU set.

For example, when video data in a GOP format is XR content, the AF 308 performs control so to assign the I frame to a PDU with the highest priority in the PDU set. As a result, the base station 20 can assign SPS configured in an earlier slot from among the plurality of SPSs to the I frame.

On the other hand, the AF 308 performs control to assign the P frame or the B frame to PDU with a lower priority. The base station 20 assigns a radio resource by another SPS or dynamic scheduling to the P frame or the B frame.

In addition, when requesting configurations of a plurality of PDU sets, the AF 308 can request a network function of the 5GC 30 to set a relative priority for each PDU set.

The network function of the 5GC 30 sets a relative priority to each PDU set of the plurality of PDU sets that receive and set the request from the AF 308.

When a relative priority is set to each PDU set of the plurality of PDU sets, the base station 20 assigns SPS to PDU constituting a PDU set with a higher priority. For example, in a case of XR content which is video data in a GOP format, the AF 308 performs control so to assign the I frame to a PDU set with a higher priority. In response, the base station 20 can assign SPS to the I frame. The base station 20 assigns the P frame or the B frame to a PDU set with a lower priority. Radio resources by dynamic scheduling are assigned to the P frame or the B frame.

Furthermore, when a plurality of SPSs is configured, the base station 20 assigns SPS configured in an earlier slot from among the plurality of SPSs to PDU of a PDU set with the highest priority. For example, in a case of XR content which is video data in a GOP format, the AF 308 performs control so to assign the I frame to a PDU set with the highest priority. In response, the base station 20 can assign SPS configured in an earlier slot from among the plurality of SPSs to PDU of the PDU set to which the I frame is assigned. The base station 20 assigns the P frame or the B frame to a PDU set with a lower priority. Radio resources by another SPS or dynamic scheduling are assigned to PDU of the PDU set to which the P frame or the B frame is assigned.

In addition, when a PDU set is configured in an uplink data burst DB and a relative priority is set to each PDU of the PDU set, the base station 20 configures CG in the UE 10 for transmission of PDU with a higher priority in the PDU set. For example, when video data in a GOP format is XR content, the UE 10 can assign CG to the I frame by assigning the I frame to PDU with a higher priority in the PDU set.

Furthermore, when a plurality of PDU sets is configured in an uplink data burst DB and a relative priority is set to each PDU, the base station 20 configures CG in the UE 10 for transmission of PDU of a PDU set with a higher priority. For example, the UE 10 can assign CG to the I frame by assigning the I frame to a PDU set with a higher priority.

Alternatively, the XR content may be a 360 degree image compatible with 3 degree of freedom (DoF) and 6DoF. In this case, for example, the application server 40 may divide the 360 degree image into a plurality of regions. In addition, the AF 308 may perform control to assign each divided region to each PDU of the PDU set.

The AF 308 can provide the number of divisions of the 360 degree image to a network function (for example, the TSCTSF 312, the PCF 305, or the SMF 306) of the 5GC 30 as the number of PDUs configured for one PDU set described above.

The terminal device 10 or an application operating on the application server 40 calculates a viewport on the 360 degree image on the basis of information acquired from various sensors included in the terminal device 10. The sensors include, for example, a global navigation satellite system (GNSS) receiver, an acceleration sensor, a gyro sensor, a camera (image sensor), a time of flight (ToF) sensor, an infrared sensor, light detection and ranging (LiDAR), and a millimeter wave radar.

The AF 308 gives the highest priority level to image data of a region including the viewport among the plurality of divided regions, and performs control to assign the image data of this region to PDU with the highest priority level in the PDU set. As a result, the base station 20 can assign SPS to the image data of the region including the viewport.

On the other hand, the AF 308 performs control to assign each piece of image data of a region farther from the viewport to PDU with a lower priority. The base station 20 assigns a radio resource by dynamic scheduling according to a priority level to each piece of image data in a region farther from the viewport. The base station 20 dynamically assigns a radio resource including an earlier slot to image data with a higher priority level among pieces of image data in a region farther from the viewport.

Furthermore, when a plurality of SPSs is configured, the AF 308 gives the highest priority level to image data of a region including the viewport, and performs control to assign the image data of this region to PDU with the highest priority level in the PDU set. As a result, the base station 20 can assign SPS configured in an earlier slot from among the plurality of SPSs to the image data of the region including the viewport.

On the other hand, the AF 308 performs control to assign image data of a region farther from the viewport to PDU with a lower priority. The base station 20 assigns a radio resource by another SPS or dynamic scheduling according to a priority level to each piece of image data in a region farther from the viewport. The base station 20 dynamically assigns a radio resource including an earlier slot from among radio resources by another SPS or dynamic scheduling to image data with a higher priority level among pieces of image data of a region farther from the viewport.

In addition, the AF 308 may control the format of the image data assigned to each PDU according to a priority level of PDU of a PDU set. For example, the AF 308 performs control such that a higher resolution image format is applied to the region including the viewport, and image data of the region is assigned to PDU with the highest priority in the PDU set.

On the other hand, the AF 308 performs controls to apply a lower resolution image format to a region farther from the viewport and to assign image data of the region farther from the viewport to PDU with a lower priority in the PDU set. With this control, the data volume of the image data can be reduced.

Here, when PDU that cannot be transmitted within the first survival time of each data burst DB occurs in the PDU set, the base station 20 can discard the PDU. At this time, PDU with a lower priority level is discarded.

Alternatively, in order to configure a PDU set for each divided region, the AF 308 may request a network function (for example, the TSCTSF 312, the PCF 305, or the SMF 306.) of the 5GC 30 to configure a number of PDU sets equal to the number of divisions of the 360 degree image. That is, each divided region can configure a PDU set independently of other regions.

When a PDU set is configured for each divided region, the AF 308 may set a relative priority to each PDU set. For example, the AF 308 gives the highest priority level to image data of a region including the viewport, and performs control to assign the image data of this region to a PDU set with the highest priority level. The AF 308 gives a lower priority level to a region farther from the viewport, and performs control to apply image data of the region farther from the viewport to a PDU set with a lower priority level.

A plurality of PDU sets configured for each divided region is assigned to one data burst DB.

Here, the image data of each region may be video data in a GOP format. In this case, the AF 308 may further request a network function (for example, the TSCTSF 312, the PCF 305, or the SMF 306) of the 5GC 30 to configure a PDU set for each of the I frame, the P frame, and the B frame.

A PDU set to which information of any one of the I frame, the P frame, and the B frame of each region is assigned is assigned to one data burst DB.

As described above, the AF 308 assigns one GOP including image frame information (that is, the I frame, the P frame, or the B frame) of each divided region to each PDU set. In addition, the AF 308 assigns one PDU set to one data burst DB (FIG. 14). Alternatively, the AF 308 assigns each PDU in one PDU set to one data burst DB (FIG. 15).

In addition, when a plurality of PDU sets is assigned to one data burst DB, the AF 308 assigns information of any one of the I frame, the P frame, and the B frame constituting one GOP to each PDU set.

In addition, the GOP configuration of each divided region can be controlled according to the viewport. For example, in a region including the viewport, a change in recognized image is large. Therefore, the AF 308 shortens a period of one GOP and transmits many I frames which are key frames.

On the other hand, in the region farther from the viewport, the change in the recognized image is small. Therefore, the AF 308 extends the period of one GOP and transmits many P frames or B frames for one I frame. As a result, the AF 308 can reduce the data volume of the image data.

In addition, when a PDU session to process a TSC QoS flow is established, the AF 308 can assign a sequential number to each data burst DB in order to manage the order of the data burst DB on the basis of the TSC assistance information.

Furthermore, when configuring a PDU set, the AF 308 can assign a sequential number to each PDU set in order to manage the order of the PDU set.

When one PDU set is assigned to one data burst DB (FIG. 14), a sequential number corresponding to a data burst DB is assigned to a PDU set. That is, the base station 20 can identify a PDU set corresponding to a data burst DB by the sequential number.

When any PDU in a PDU set with a sequential number corresponding to this data burst DB cannot be transmitted within the first survival time of each data burst DB, the base station 20 can discard this PDU. Even when the base station 20 transmits the PDU during the next data burst DB period, the PDU is already unnecessary data for the application. Therefore, the base station 20 can avoid wasting a radio resource by discarding this PDU.

Furthermore, the AF 308 may assign a sequential number to each PDU in order to manage the order of the PDU in the PDU set. The base station 20 manages a radio resource assigned to each PDU according to a sequential number assigned to each PDU.

For example, it is assumed that the base station 20 fails to transmit PDU whose sequential number is earlier (for example, the number is #i (i is a natural number)). In this case, the base station 20 prioritizes assignment of a radio resource for retransmission of PDU whose sequential number is earlier (for example, the number is #i) than transmission of PDU whose sequential number is next (for example, the number is #i+1).

The base station 20 can assign a radio resource for transmission of PDU whose sequential number is next (for example, the number is #i+1) after successfully transmitting PDU whose sequential number is earlier (for example, the number is #i).

As described above, the frame (that is, the P frame or the B frame) constituting the GOP, other than the I frame, reproduces one image by referring to the immediately preceding frame or the previous and subsequent frames. Therefore, when the previous frame is not successfully received, receiving data of the next frame generates a useless radio resource.

The AF 308 assigns the I frame to PDU whose sequential number is earlier (for example, the number is #i), and assigns the P frame or the B frame to PDU whose sequential number is next (for example, the number is #i+1). After successfully transmitting the PDU to which the I frame is assigned, the base station 20 assigns a radio resource for transmitting PDU to which the P frame or the B frame is assigned. As a result, the base station 20 can avoid generation of a useless radio resource.

When each PDU of the PDU set is assigned to each data burst DB (FIG. 15), a sequential number corresponding to the data burst DB is assigned to each PDU of the PDU set. That is, the base station 20 can identify PDU corresponding to a data burst DB by the sequential number.

The base station 20 transmits PDU corresponding to the sequential number #i at a timing of transmitting a data burst DB corresponding to the sequential number #i. The base station 20 assigns a radio resource for this purpose.

When a plurality of PDUs of the PDU set is received from the UPF 330 at a timing of a data burst DB corresponding to the sequential number #i, the base station 20 discards PDU corresponding to a sequential number before the sequential number #i-1. On the other hand, the base station 20 buffers PDU corresponding to a sequential number after the sequential number #i+1.

The base station 20 transmits PDU corresponding to the sequential number #i+1 from among the buffered PDUs at a timing of transmitting a data burst DB corresponding to the sequential number #i+1. The base station 20 assigns a radio resource for this purpose.

In addition, the frame (that is, the P frame or the B frame) other than the I frame reproduces one image by referring to the immediately preceding frame or the previous and subsequent frames. Therefore, when GOP is assigned to a PDU set, receiving data of the next frame although the previous frame has not been successfully received generate a useless radio resource.

For example, it is assumed that the base station 20 receives a plurality of PDUs of a PDU set from the UPF 330 at a timing of receiving a data burst DB corresponding to the sequential number #i. In this case, the base station 20 may assign a radio resource in order to transmit PDU corresponding to a sequential number before #i-1 in preference to PDU corresponding to the sequential number #i. At this time, a radio resource is assigned more preferentially to PDU corresponding to an earlier sequential number.

Here, when a plurality of PDU sets is assigned to one data burst DB, the above PDU processing method according to a sequential number can be applied to a PDU set processing method according to a sequential number.

According to the above processing, the base station 20 preferentially assigns a radio resource to data of a previous frame. As a result, the base station 20 can avoid generation of a useless radio resource. In addition, the base station 20 can configure discontinuous reception (DRX) in the UE 10 according to a timing of the data burst DB.

The base station 20 can grasp in advance a timing of receiving a periodic data burst DB via the TSC assistance information. Therefore, the base station 20 can set in advance the above-described period for assigning a radio resource by SPS, CG, or dynamic scheduling for transmission of each data burst DB.

Therefore, the base station 20 can configure DRX in which the period for assigning a radio resource set in advance is an active period and the other periods are inactive periods in the UE 10. As a result, the base station 20 can reduce power consumption of the UE 10.

In addition, in XR, transmission and reception of information related to various sensors, sound, data related to a video image, and the like are assumed. In addition, the data burst DB can include traffic having different QoS features. Therefore, a plurality of different QoS flows may be assigned to one PDU set. At this time, information related to configuration of a PDU set includes different 5QIs assigned to the plurality of PDUs.

The base station 20 determines assignment of radio resources to the plurality of PDUs included in the PDU set according to a priority level of 5QI. Here, the assignment of radio resources is assignment of radio resources by SPS, CG, or dynamic scheduling described above.

In addition, in a multimodal application that treats a plurality of types of data, such as XR, it is assumed that a plurality of types of data (for example, pose information, or various types of sensor information, audio information, or image information for calculating pose information) depends in a time domain and synchronization is necessary. In this case, the AF 308 can provide the number of types of data generated at an application level or an information set identifying the data type to the 5GC 30 to request assignment of these data to the same data burst DB.

The 5GC 30 configures one PDU set for a plurality of pieces of data having a dependency and assigns the PDU set to one data burst DB. As a result, the 5GC 30 can assign a plurality of pieces of data having a dependency to the same data burst DB.

Here, the AF 308 can request the 5GC 30 to set a relative priority level between a plurality of types of data generated at an application level, and the 5GC 30 sets a relative priority level between PDUs to which the plurality of types of data is assigned.

Alternatively, the 5GC 30 may configure a PDU set for each of a plurality of pieces of data having a dependency and generate one list including the plurality of PDU sets. The 5GC 30 assigns a plurality of PDU sets included in one list to one data burst DB. As a result, the 5GC 30 can assign a plurality of pieces of data having a dependency to the same data burst DB.

Here, the AF 308 can request the 5GC 30 to set a relative priority level between a plurality of types of data generated at an application level, and the 5GC 30 sets a relative priority level between PDU sets to which the plurality of types of data is assigned.

In addition, when there is a dependency between uplink data and downlink data, the AF 308 can further request the number of types of data generated at an application level per link or an information set identifying the type of data, and mapping of a first PDU set to assign uplink data and a second PDU set to assign downlink data.

It is assumed that the AF 308 provides a relative allowable period of the first PDU set and the second PDU set when requesting mapping of the uplink first PDU set and the downlink second PDU set. In this case, the 5GC 30 configures a data burst DB of the same periodicity in the uplink and the downlink. For example, the 5GC 30 configures uplink and downlink data burst DBs such that a difference between a timing of a lapse of a survival time of the uplink data burst DB to which the first PDU set is assigned and a timing of a burst arrival time of the downlink data burst DB to which the second PDU set is assigned in the UPF 330, the UE 10, or the RAN 20 is equal to or less than an allowable period. For example, the burst arrival time of the uplink or downlink data burst DB is adjusted.

Here, the AF 308 can request an upper limit and a lower limit for the relative allowable period. The 5GC 30 performs control such that the difference between a timing of a lapse of a survival time of the uplink data burst DB to which the first PDU set is assigned and a timing of a burst arrival time of the downlink data burst DB to which the second PDU set is assigned falls between the upper limit and the lower limit.

[Edge application server]

Note that, when the PDU session is established with the UE 10, configuration may be made such that a part or a whole of processing performed by the application server 40 is performed by an edge application server (not illustrated).

Implementation that causes the edge application server to perform at least a part of the processing is started by the SMF 306, for example, according to a request from the AF 308. Alternatively, implementation on the edge application server is started according to information for identifying a network slice included in a PDU session establishment request. For example, the SMF 306 acquires, from the PCF 305, a policy corresponding to the information for identifying the network slice, and starts processing of implementation on the edge application server according to the acquired policy.

In addition, this implementation on the edge application server can be started when the SMF 306 determines that CN PDB of 5QI assigned to a data burst DB is not satisfied. The SMF 306 acquires a report that CN PDB is not satisfied from the RAN 20. Alternatively, the SMF 306 detects that CN PDB is not satisfied via QoS monitoring.

The SMF 306 specifies a UPF 330 serving as a local PDU session anchor (L-PSA) and an edge application server on the basis of the location information of the UE 10 and/or the RAN 20. Alternatively, the L-PSA UPF 330 and the edge application server corresponding to the RAN 20 may be set in advance.

Here, connection between the L-PSA UPF 330 and the edge application server can be identified by a data network access identifier (DNAI). In addition, for example, one or more DNAIs may be configured for a combination of an application or DNN and S-NSSAI.

The SMF 306 selects one DNAI on the basis of information related to the location of the UE 10 or information for identifying the RAN 20 to which the UE 10 is connected. The SMF 306 specifies connection between the L-PSA UPF 330 and the edge application server corresponding to the selected DNAI.

When a part of processing of the application server 40 is implemented on the edge application server, the edge application server is connected via the L-PSA UPF 330 in a connection form of a session breakout.

When a whole of processing of the application server 40 is implemented on the edge application server, the edge application server is connected via the L-PSA UPF 330 in a connection form of a distributed anchor point.

Through the above processing, the application server 40 and 5GS can stably transmit the data burst DB scheduled in a low-delay wireless communication environment to the UE 10 that is a terminal device.

In addition, in the above example, the SMF 306 notifies the RAN 20 of the information regarding the second burst arrival time via the TSC assistance information. Note that the second burst arrival time is defined as a time as late as possible for a first packet of the data burst DB to reach an input of the RAN 20. However, the information of which the RAN 20 is notified by the SMF 306 is not limited thereto.

For example, the SMF 306 may notify the RAN 20 of the first burst arrival time, which is a time when the first packet of the data burst DB arrives at an input of the UPF 330, and information related to CN PDB. In this case, the RAN 20 calculates the second burst arrival time from the first burst arrival time and the information related to CN PDB.

Alternatively, the SMF 306 may notify the RAN 20 of a time t0 at which the first packet of the data burst DB is transmitted from the application server 40, a delay T1 from the application server 40 to the UPF 330, and information related to CN PDB. In this case, the RAN 20 calculates the second burst arrival time from the time t0, the time T1, and the information related to CN PDB.

<4.2. Technical feature 2>

Data is transmitted and received using link adaptation between the UE 10 which is a terminal device and a base station (for example, gNB) constituting the RAN 20. In this transmission and reception, a modulation and coding scheme (MCS) (an example of a modulation parameter) corresponding to communication quality between the terminal device 10 and the base station 20 is used.

That is, the size of data that can be transmitted per symbol by the terminal device 10 and the base station 20 changes depending on communication quality between the terminal device 10 and the base station 20. For example, when the communication quality is good, the terminal device 10 or the base station 20 can transmit more data. On the other hand, when the communication quality is poor, the terminal device 10 or the base station 20 can transmit only less data.

Therefore, the size of data that can be transmitted per slot assigned by SPS configured in the technical feature 1 described above changes depending on the communication quality between the terminal device 10 and the base station 20.

Therefore, here, the base station 20 controls SPS according to MCS. For example, the base station 20 specifies MCS, and makes SPS configurations as many as necessary to transmit the data burst DB of the maximum data burst volume using the specified MCS. For example, the base station 20 specifies MCS on the basis of a channel state with the terminal device 10. The base station 20 acquires information regarding at least one of a QoS flow and BWP assigned for transmitting a data burst. The base station 20 configures SPS necessary for transmitting the maximum data burst volume in the QoS flow.

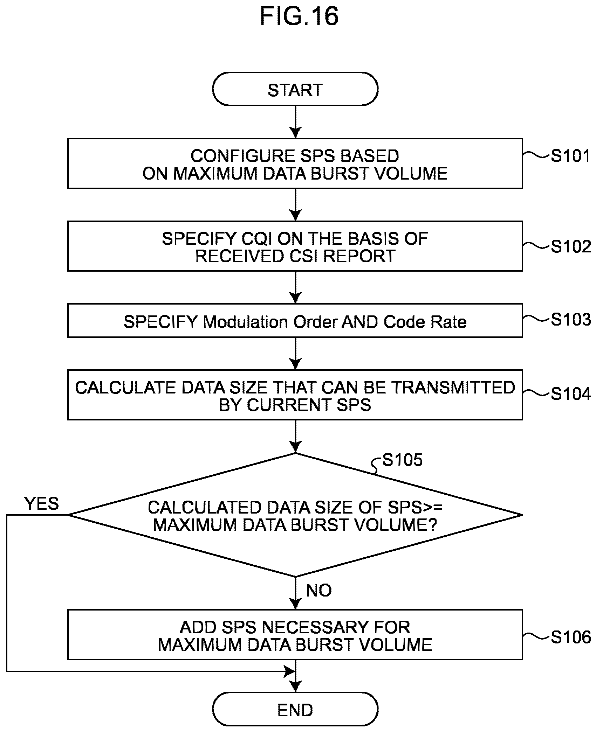

FIG. 16 is a flowchart illustrating an example of a flow of SPS control processing according to the embodiment of the present disclosure. The SPS control processing illustrated in FIG. 16 is executed by the base station 20.

As illustrated in FIG. 16, the base station 20 configures SPS based on a maximum data burst volume with reference to a timing (reference timing) obtained by adding a period of a protected window to the second burst arrival time (step S101).

The base station 20 specifies a channel quality indicator (CQI) on the basis of the received channel state information (CSI) report (step S102). The CSI report is state information regarding a channel state with the terminal device 10, and is transmitted from the terminal device 10.

The base station 20 specifies a modulation order and a code (coding) rate (an example of modulation parameter) corresponding to CQI (step S103).

The base station 20 calculates a data size that can be transmitted by the current (configured) SPS using the specified modulation order and code rate (step S104). The base station 20 determines whether the calculated data size of SPS is equal to or larger than the maximum data burst volume of the scheduled data burst DB (step S105).

If the calculated data size of SPS is equal to or larger than the maximum data burst volume (step S105; Yes), the base station 20 ends the processing.

On the other hand, if the calculated data size of SPS is not equal to or larger than the maximum data burst volume (step S105; No), the base station 20 adds SPS necessary for the maximum data burst volume (step S106), and ends the processing.

Here, in order to add SPS, the base station 20 changes, for example, numberOfSlotsPerSPS for continuously assigning a plurality of slots as resources of SPS on the time axis. Alternatively, the base station 20 adds sps-Config of one or more SPSs to be additionally configured to sps-ConfigToAddModList included in an information element (IE) for BWP-DownlinkDedicated. The base station 20 updates the sps-ConfigToAddModList configured in the terminal device 10 using an RRC message. Each sps-Config included in sps-ConfigToAddModList can be identified by sps-ConfigIndex.

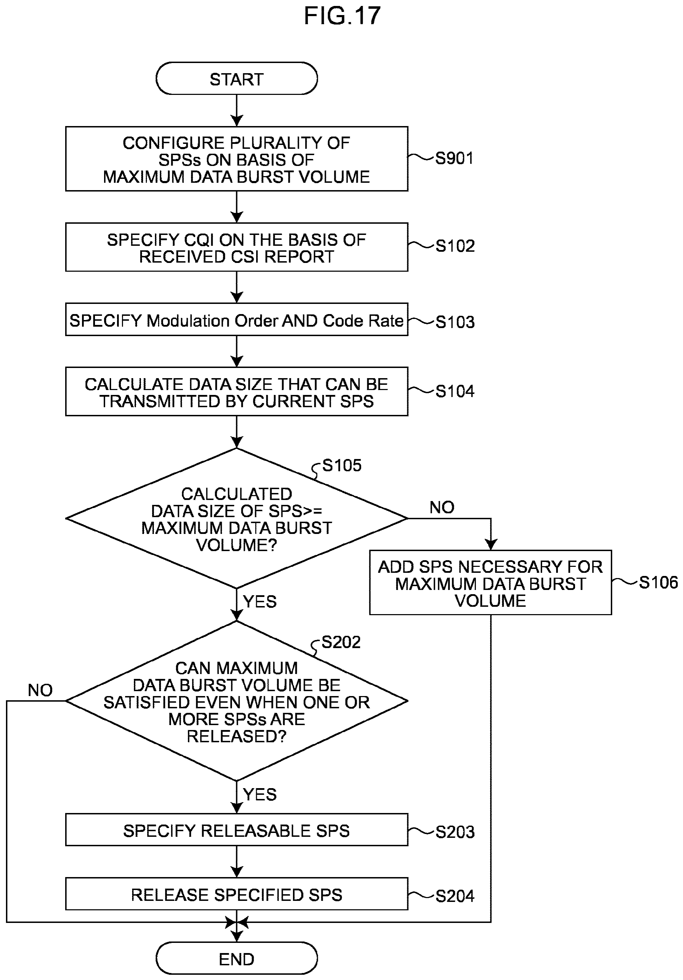

FIG. 17 is a flowchart illustrating another example of the flow of SPS control processing according to the embodiment of the present disclosure. The SPS control processing illustrated in FIG. 17 is executed by the base station 20. In addition, the same processes as those in the SPS control processing illustrated in FIG. 16 are denoted by the same reference numerals, and a part of description thereof will be omitted.

The base station 20 configures a plurality of SPSs on the basis of the maximum data burst volume (step S201). Thereafter, the base station 20 calculates a data size that can be transmitted by the plurality of current SPSs, and determines whether the calculated data size of SPS is equal to or larger than the maximum data burst volume of the scheduled data burst DB (steps S102 to S105).

If the calculated data size of the SPS is not equal to or larger than the maximum data burst volume (step S105; No), the base station 20 adds SPS necessary for the maximum data burst volume (step S106), and ends the processing.

On the other hand, if the calculated data size of SPS is equal to or larger than the maximum data burst volume (step S105; Yes), the base station 20 determines whether or not the maximum data burst volume can be satisfied when one or more SPSs are released (step S202).

If the sider data burst volume cannot be satisfied when one or more SPSs are released (step S202; No), the base station 20 ends the processing.

If the maximum data burst volume can be satisfied even when one or more SPSs are released (step S202; Yes), the base station 20 specifies one or more releasable SPSs

(203). For example, the base station 20 specifies, as a releasable SPS, SPS configured in a slot later in a time region.

The base station 20 releases the specified SPS from among the plurality of configured SPSs (S204). Here, the base station 20 releases the SPS, for example, by changing numberOfSlotsPerSPS for continuously assigning a plurality of slots as resources of SPS on the time axis. Alternatively, the base station 20 deletes sps-Config of one or more SPSs to be released from sps-ConfigToAddModList included in IE for BWP-DownlinkDedicated. The base station 20 updates the sps-ConfigToAddModList configured in the terminal device 10 using an RRC message.

Here, when transmitting the maximum data burst volume of the scheduled data burst, the base station 20 changes numberOfSlotsPerSPS or sps-ConfigToAddModList using an RRC message. As a result, the base station 20 adds or releases a radio resource (configured downlink assignment) required according to MCS. However, a method by which the base station 20 adds or releases a radio resource is not limited to the above-described example.

For example, the base station 20 may add or release a radio resource by setting configured downlink assignments by a plurality of sps-Configs by RRC. In this case, the base station 20 instructs activation or deactivation of one or more configured downlink assignments(s) using L1 signaling, that is, DCI.

Through the above processing, even when communication quality between the terminal device 10 and the base station 20 changes, the application server 40 and 5GS can stably transmit a data burst DB scheduled in a low-delay wireless communication environment to the terminal device 10 (UE 10). Note that the communication quality between the terminal device 10 and the base station 20 changes depending on, for example, mobility of the terminal device 10.

In addition, when determining that the maximum data burst volume cannot be processed within a period of 5G-AN PDB, the base station 20 may feed back a notification that the maximum data burst volume cannot be processed to the AF 308. The AF 308 transfers this notification to the application server 40.

The application server 40 that has received the notification that the base station 20 cannot process the maximum data burst volume via the AF 308 determines a change to a format having a smaller data volume than the current volume, for example, a format of a video having a lower resolution.

The application server 40 provides information regarding a traffic pattern generated on the basis of the changed data format to the TSCTSF 312. The TSCTSF 312 updates the TSC assistance container on the basis of the acquired information related to the traffic pattern. The information related to the traffic pattern includes a maximum TSC burst size corresponding to the changed data format.

The PCF 305 acquires the updated TSC assistance container from the TSCTSF 312. The PCF 305 transfers the updated TSC assistance container as a part of a PCC rule to the SMF 306.

The SMF 306 acquires the PCC rule from the PCF 305 along with the updated TSC assistance container. The SMF 306 associates the PCC rule with a QoS flow. Here, the SMF 306 associates the PCC rule with a QoS flow of 5QI having a maximum data burst volume equal to or larger than the maximum data burst size.

The base station 20 ensures a radio resource by dynamic scheduling or SPS such that the maximum data burst volume reflecting the changed data format can be processed within the period of 5G-AN PDB.

Through the above processing, the communication system 1 can select an adaptive data format by an application according to a use status of a radio resource of the base station 20, and availability of low-delay communication is improved.

<4.3. Technical feature 3>

In the technical feature 1 described above, the base station (for example, gNB) constituting the RAN 20 configures SPS in a slot after a timing of completing reception of each data burst DB, and transmits a scheduled data burst DB. In this case, since the base station 20 needs a buffer having a sufficient size in order to hold all data bursts DB, it is desirable to further reduce the size of the buffer. Furthermore, it is desirable to achieve a lower delay from a viewpoint of TSC.

Therefore, here, a mechanism capable of further reducing the buffer size of the base station 20 and achieving a lower delay will be described.

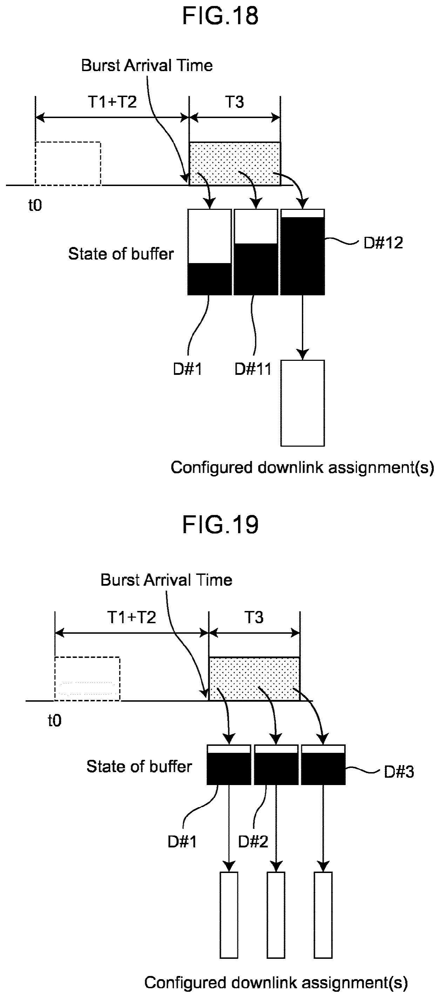

FIG. 18 is a diagram illustrating an example of processing performed on a data burst DB scheduled by the RAN 20 according to the embodiment of the present disclosure. FIG. 18 illustrates processing performed in the technical feature 1 described above.

In the processing illustrated in FIG. 18, each data burst DB received in the period T3 of the protected window is sequentially stored in one buffer. In a first buffer state, data D#1 up to a first section within the period of the protected window including a first packet is stored in the buffer.

In a second buffer state, in addition to data D#1 up to the first section, data D#11 including data #2 up to a second section within the period of the protected window is stored in the buffer.

In a third buffer state, in addition to data D#11 up to the first section and the second section, data D#12 including data D#3 up to a third section within the period of the protected window is stored in the buffer. That is, in the third buffer state, data D#12 in all the sections within the period of the protected window including the first section to the third section is stored in the buffer.

At a reference timing (t0 + T1 + T2 + T3) obtained by adding the period of the protected window to the second burst arrival time, the buffer of the base station 20 enters the third buffer state.

In the example of FIG. 18, data D#12 stored in the buffer is assigned to configured downlink assignment(s) of SPS configured after the reference timing and transmitted to the terminal device 10.

FIG. 19 is a diagram illustrating another example of the processing performed on the data burst DB scheduled by the RAN 20 according to the embodiment of the present disclosure.

In the processing illustrated in FIG. 19, the base station 20 divides each data burst DB received in the period T3 of the protected window and stores the divided data burst DB in one buffer. The base station 20 configures a plurality of SPSs such that the plurality of SPSs is assigned to configured downlink assignment of SPS at a timing when a certain volume of data burst DB is stored in the buffer.

In the example of FIG. 19, in the first buffer state, data D#1 up to the first section within the period of the protected window including the first packet is stored in the buffer. The buffered data D#1 is assigned to configured downlink assignment of the first SPS configured within the period T3 of the protected window.

In the second buffer state, data D#2 in the second section after the first section is stored in the buffer. The buffered data D#2 is assigned to configured downlink assignment of the second SPS that is configured after the first SPS within the period T3 of the protected window.

In the third buffer state, the remaining data D#3 after the second section is stored in the buffer. The buffered data D#3 is assigned to configured downlink assignment of the third SPS configured after the reference timing (t0 + T1 + T2 + T3) obtained by adding the period of the protected window to the second burst arrival time.

As described above, the base station 20 configures one or more SPSs within the period T3 of the protected window. Furthermore, the base station 20 sequentially assigns the data buffered up to the timing of this/these SPS(s) to configured downlink assignment(s) of this/these SPS(s) and transmits the data to the UE 10 which is a terminal device. In other words, the base station 20 assigns SPS and transmits the data (an example of received data) to the terminal device 10 after the arrival time of the data burst DB (second burst arrival time) without waiting for a lapse of a period of the protected window (that is, a lapse of the reference timing).

As a result, it is possible to reduce a capacity of the buffer that needs to be included in the base station 20. Furthermore, the base station 20 can reduce the size of data stored in the buffer when reception of all pieces of data in each scheduled data burst DB is completed. Therefore, the base station 20 can advance a time until the terminal device 10 completes reception of all pieces of data of each data burst.

Note that, in the above-described example, the base station 20 configures two SPSs (first and second SPSs) within the period T3 of the protected window, but the number of SPSs configured by the base station 20 is not limited to two. The base station 20 may configure one SPS or may configure three or more SPSs within the period T3 of the protected window.

<4.4. Technical feature 4>

The RAN 20 transmits, to the UE 10, a data burst DB scheduled using a radio resource assigned by dynamic scheduling or SPS on the basis of the acquired TSC assistance information.

At this time, the RAN 20 may determine a scheduling method of either dynamic scheduling or SPS according to 5G-AN PDB of 5QI of the TSC QoS flow assigned to the scheduled data burst DB.

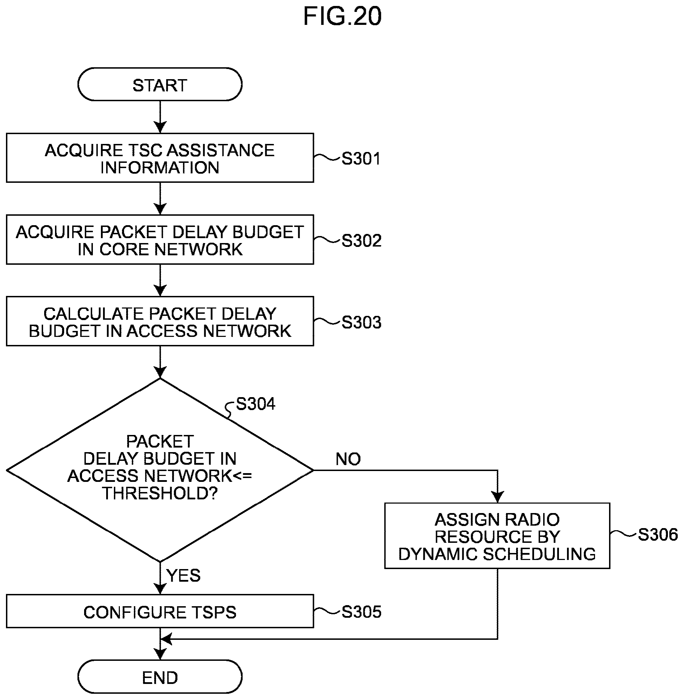

FIG. 20 is a diagram illustrating an example of a flow of resource assignment processing based on a packet delay budget according to the embodiment of the present disclosure. This resource assignment processing is performed by the base station 20.

As illustrated in FIG. 20, the base station (for example, gNB) constituting the RAN 20 acquires TSC assistance information from the SMF 306 (step S301). Here, the TSC assistance information includes a threshold for 5G-AN PDB.

When CN-PDB is fixed or dynamically configured by the SMF 306, the base station 20 acquires the configured CN-PDB (packet delay budget in a core network) from the SMF 306 (step S302).

The base station 20 calculates 5G-AN PDB (packet delay budget in an access network) by subtracting CN-PDB from PDB of 5QI of the TSC QoS flow (step S303). Here, the base station 20 may acquire CN-PDB from the SMF 306 while the CN-PDB is included in the TSC assistance information.

The base station 20 compares the calculated 5G-AN PDB with a threshold (for example, 1 ms) included in the TSC assistance information, and determines whether or not 5G-AN PDB is equal to or less than the threshold (step S304).

If 5G-AN PDB is equal to or less than the threshold (step S304; Yes), the base station 20 configures SPS for transmission of the scheduled data burst DB (step S305). The base station 20 configures configured downlink assignment(s) of SPS.

On the other hand, if 5G-AN PDB exceeds the threshold (step S304; No), the base station 20 assigns a radio resource by dynamic scheduling for transmission of the scheduled data burst DB (step S306).

Note that, here, the base station 20 determines whether or not 5G-AN PDB is equal to or less than the threshold in step S304, but the determination method is not limited thereto. For example, the base station 20 may determine whether or not 5G-AN PDB is less than the threshold in step S304.

In addition, here, the base station 20 performs resource assignment according to 5G-AN PDB, but the resource assignment method is not limited thereto. For example, the base station 20 may assign a resource according to a measurement result of the burst arrival time.

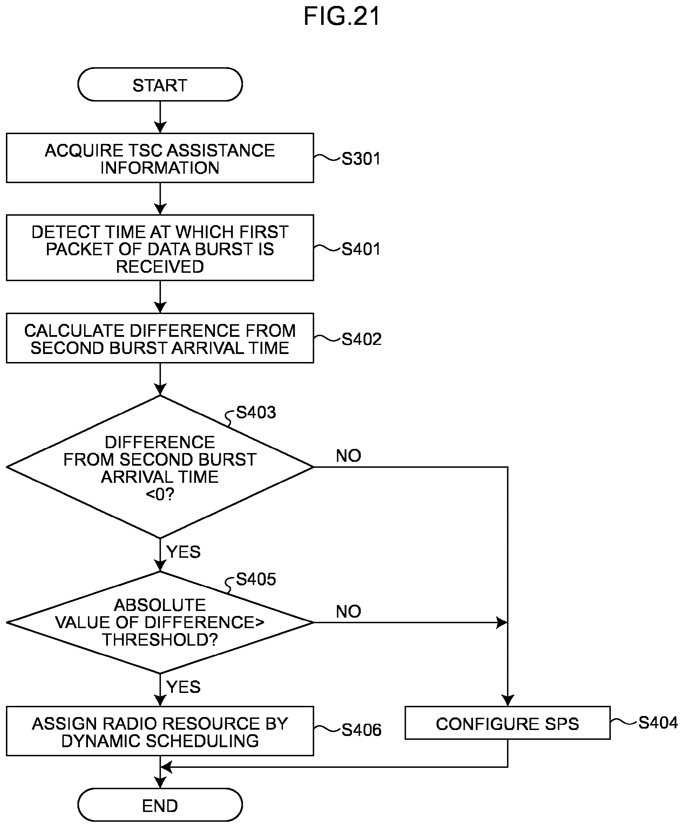

FIG. 21 is a diagram illustrating an example of a flow of resource assignment processing based on a measurement result of a burst arrival time according to the embodiment of the present disclosure. This resource assignment processing is performed by the base station 20.

As illustrated in FIG. 21, the base station (for example, gNB) constituting the RAN 20 acquires TSC assistance information from the SMF 306 (step S301). Here, the TSC assistance information includes a threshold for a measurement result of the burst arrival time.

The base station 20 detects a time (t_arrival) at which a first packet of a data burst DB transmitted from the application server 40 is received (step S401).

The base station 20 calculates a difference from the second burst arrival time included in the TSC assistance information (step S402).

When the base station 20 cannot acquire CN-PDB from the SMF 306, the base station 20 determines a scheduling method of either dynamic scheduling or SPS according to a difference of t_arrival from the second burst arrival time.

The base station 20 determines whether or not the difference of t_arrival from the second burst arrival time is a negative value. That is, the base station 20 determines whether or not the difference is less than 0 (step S403).

When the first packet of the data burst DB transmitted from the application server 40 arrives at the base station 20 at the second burst arrival time or later than the second burst arrival time, the difference is 0 or more.

In this case (step S403; No), the base station 20 configures SPS for transmission of the scheduled data burst (step S404). The base station 20 configures configured downlink assignment(s) of SPS.

Here, the base station 20 configures configured downlink assignment(s) of SPS with reference to a timing (reference timing) obtained by adding the period of the protected window to the second burst arrival time.

On the other hand, when the first packet of the data burst DB transmitted from the application server 40 arrives at the base station 20 earlier than the second burst arrival time, the difference of t_arrival from the second burst arrival time is a negative value (less than 0).

In this case (step S403; Yes), the base station 20 determines whether or not an absolute value of the difference exceeds a threshold (for example, 1 ms) included in the TSC assistance information (step S405).

If the absolute value of the difference exceeds the threshold (step S405; Yes), the base station 20 assigns a radio resource by dynamic scheduling for transmission of the scheduled data burst DB (step S406).

On the other hand, if the absolute value of the difference does not exceed the threshold, that is, if the absolute value of the difference is equal to or more than the threshold (step S405; No), the base station 20 executes step S404.

Here, the base station 20 configures configured downlink assignment(s) of SPS on the basis of a timing obtained by adding the period of the protected window to t_arrival.

Note that when determining that the difference is a positive value in step S403, the base station 20 determines that CN PDB of 5QI assigned to the data burst DB in the established PDU session is not satisfied. That is, when receiving the first packet of the data burst transmitted from the application server 40 later than the second burst arrival time, the base station 20 determines that CN PDB is not satisfied. In this case, the base station 20 reports the fact to the SMF 306.

Here, the SMF 306 can acquire a measurement result of CN PDB via the above-described QoS monitoring. As a result, the SMF 306 may detect that CN PDB of 5QI assigned to the data burst DB is not satisfied.

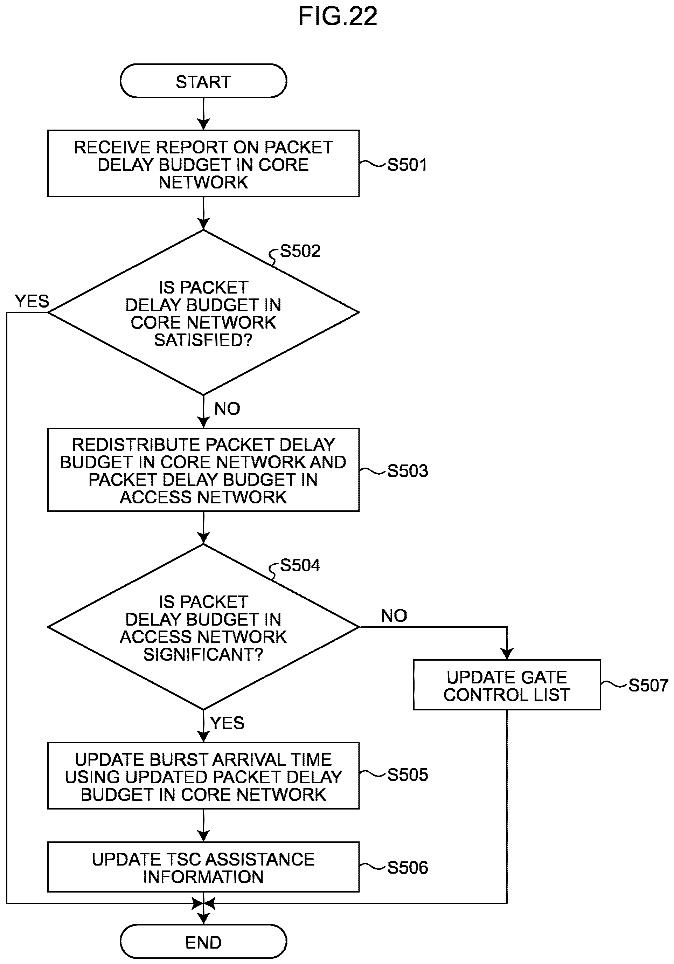

FIG. 22 is a diagram illustrating an example of a flow of update processing of TSC assistance information according to the embodiment of the present disclosure. The update processing is executed by the SMF 306.

As illustrated in FIG. 22, the SMF 306 acquires a report on packet delay budget in a core network (step S501). This report indicates that CN PDB of 5QI assigned to the data burst DB is not satisfied in a PDU session established for transmission of the data burst DB.

Here, the report on the packet delay budget in the core network may be a measurement result of CN PDB via QoS monitoring.

Subsequently, the SMF 306 determines whether or not CN PDB (packet delay budget in the core network) of 5QI assigned to the data burst DB is satisfied (step S502).

If the SMF 306 detects (determines) that CN PDB of 5QI assigned to the data burst DB is satisfied (step S502; Yes), the SMF 306 ends the processing.

On the other hand, if the SMF 306 detects (determines) that CN PDB of 5QI assigned to the data burst DB is not satisfied (step S502; No), the SMF 306 redistributes CN PDB (packet delay budget in the core network) and 5G-AN PDB (packet delay budget in the access network) (step S503). Note that the SMF 306 resets the distribution of these PDBs within a range of the packet delay budget for the TSC QoS flow.

The SMF 306 determines whether or not 5G-AN PDB (packet delay budget in the access network) to be updated is significant, that is, a feasible allowable time (step S504). Here, the feasible allowable time is not a negative value but a value of 0 or more. The feasible allowable time is, for example, 500 us or more.

For example, the SMF 306 determines that 5G-AN PDB to be updated is a feasible allowable time when 5G-AN PDB to be updated is 500 us or more. If the SMF 306 determines that 5G-AN PDB to be updated is a feasible allowable time (step S504; Yes), the SMF 306 updates the second burst arrival time using updated CN PDB (packet delay budget in the access network) (step S505).

The SMF 306 updates the TSC assistance information by adding the updated second burst arrival time to the TSC assistance information (step S506), and ends the processing. Here, the updated TSC assistance information can include information indicating from which data burst DB (for example, the second data burst DB to be transmitted from now on) the updated second burst arrival time is applied.

On the other hand, for example, the SMF 306 determines that 5G-AN PDB to be updated is a feasible allowable time when 5G-AN PDB to be updated is less than 500 us. If the SMF 306 determines that 5G-AN PDB to be updated is not a feasible allowable time (step S504; No), the SMF 306 updates a gate control list (step S507), and ends the processing.

Here, the SMF 306 updates the gate control list, for example, by changing a period of a time slot of a queue to which the data burst DB is assigned to a shorter period such that the first survival time can be satisfied. Alternatively, the SMF 306 performs a change so as to block another low priority level queue that is configured to pass in the same time slot.

In addition, in step S507 described above, the SMF 306 may change assignment to a queue for priority control of traffic in addition to or instead of updating the gate control list. In this case, the SMF 306 assigns, for example, the data burst DB to a queue with a higher priority level such that CN PDB can be improved. Alternatively, the SMF 306 assigns a part or a whole of another traffic assigned to the same queue as the queue to which the data burst DB is assigned to a queue with a lower priority level.

In step S501 described above, the RAN 20 transmits, to the SMF 306, a report on the packet delay budget in the core network indicating that CN PDB of 5QI assigned to the data burst is not satisfied. At this time, the RAN 20 may further report a difference (offset) of t_arrival from the second burst arrival time. Upon receiving the report including the offset, the SMF 306 can change distribution of CN PDB on the basis of the offset in step S503.

By performing the above processing, the SMF 306 can determine a scheduling method of either dynamic scheduling or SPS according to the packet delay budget in the access network (AN PDB). Note that the packet delay budget in the access network (AN PDB) depends on the packet delay budget in the core network (CN PDB).

In addition, the SMF 306 can detect a change in the packet delay time in the core network using the packet arrival time of the TSC assistance information, and dynamically control distribution of the delay budget in the core network and the access network.

In addition, the base station 20 can stably achieve a lower delay of transmission of a TSC QoS flow in the access network by configuring SPS. On the other hand, there is a concern that the base station 20 may sacrifice data transmission of another traffic.

Therefore, when the delay budget in the core network can be shortened, the SMF 306 shortens the delay budget in the core network. As a result, the base station 20 can spend time for the packet delay budget in the access network for the TSC QoS flow.

As a result, the base station 20 can select dynamic scheduling instead of SPS. Therefore, the base station 20 can assign a flexible radio resource to an extent that the packet delay budget in the access network for the TSC QoS flow is satisfied without sacrificing data transmission of another traffic.

<4.5. Technical feature 5>

Note that, in each of the technical features described above, the transmission processing of the scheduled periodic data burst in the downlink has been mainly described. In addition, also in an uplink, the UE 10 which is a terminal device can transmit a scheduled periodic data burst to the application server 40 via the RAN 20 which is a base station and the UPF 330 by a similar mechanism.

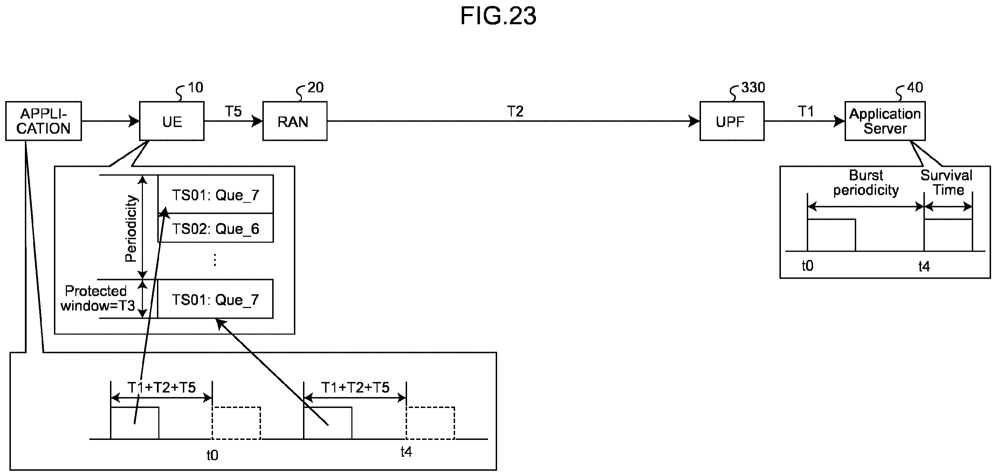

FIG. 23 is a diagram illustrating another example (uplink) of the transmission of the scheduled data burst in 5GS according to the embodiment of the present disclosure. In this case, the RAN 20 receives a data burst DB (an example of received data) from the UE 10 and transmits the data burst DB to the application server 40 via the UPF 330.

When the SMF 306 receives a PDU session establishment request from the UE 10, the TSCTSF 312 acquires information related to a traffic pattern from the AF 308 and generates a TSC assistance container. The application server 40 starts receiving a first packet of the first data burst DB#1 at time t0, and provides information related to a traffic pattern to the TSCTSF 312 such that all packets of the first data burst DB#1 can be received during the survival time.

The information related to a traffic pattern for the uplink scheduled periodic data burst DB includes a periodicity of the data burst DB, a burst arrival time, a survival time, and the like.

When the SMF 306 receives a PDU session establishment request from the UE 10, the TSCTSF 312 acquires information related to a traffic pattern from the AF 308 and generates a TSC assistance container.

The TSC assistance container includes a periodicity of the data burst DB, a third burst arrival time, and a third survival time. Here, the third burst arrival time is a time to arrive at an input port of DS-TT 51 connected to the UE 10 or DS-TT 51 configured in the UE 10 (for example, an application layer). The third burst arrival time is a time (t0 - T1 - (T2 + T5) = t0 - (T1 + T2 + T5)) obtained by subtracting a delay T1 from the UPF 330 to the application server 40 and PDB of 5QI (T2 + T5) of the TSC QoS flow assigned to the data burst from t0.

The SMF 306 acquires the TSC assistance container from the TSCTSF 312, and generates a gate control list for priority control of traffic using the periodicity of the data burst, the third burst arrival time, and the third survival time included in the TSC assistance container. Here, the priority control of traffic using the gate control list is configured in the DS-TT 51.

For example, the SMF 306 assigns the scheduled data burst to a queue (queue 7) with the highest priority level. The SMF 306 sets a period equal to or shorter than the third survival time as a period of a time slot passing through this queue. In addition, the SMF 306 sets a periodicity of this time slot to a periodicity of the data burst. The SMF 306 sets a start timing of this time slot to the third burst arrival time which is a time to arrive at an input of the DS-TT 51. The SMF 306 generates a gate control list including these settings.

The SMF 306 transmits the generated gate control list to the DS-TT 51 connected to the UE 10 or configured in the UE 10 via the UE 10. The DS-TT 51 executes priority control of traffic for which the protected window is configured according to the acquired gate control list.

The SMF 306 acquires the TSC assistance container from the TSCTSF 312 and generates TSC assistance information for a PDU session to be established. The SMF 306 considers that the third burst arrival time included in the TSC assistance container is a time for arriving at an output interface of the UE 10, and adds the third burst arrival time to the TSC assistance information as a burst arrival time to be included in the TSC assistance information.

In addition, the SMF 306 may add a fourth burst arrival time to the TSC assistance information when assuming a delay T6 (not illustrated) by priority control of traffic using the gate control list executed by the DS-TT 51. The fourth burst arrival time is a time (t0 - T1 - T2 - T5 - T6) obtained by subtracting the delay T6 from the third burst arrival time (t0 - T1 - T2 - T5).

Note that the TSCTSF 312 may generate the gate control list using the periodicity of the data burst, the third burst arrival time, and the third survival time included in the TSC assistance container. The gate control list generated by the TSCTSF 312 is provided to the UE 10 via the SMF 306.

The UE 10 requests the RAN 20 to configure CG or assign a dynamic grant (DG) according to the gate control list acquired by the DS-TT 51 connected to the UE 10 or configured as a function in the UE 10.

Alternatively, the RAN 20 may determine the configuration of CG or the assignment of DG according to the gate control list. In this case, the RAN 20 acquires the gate control list provided to the DS-TT 51 from the SMF 306. Note that this gate control list is a list for a scheduled periodic uplink data burst.

The base station 20 can configure CG on the basis of the third burst arrival time and the period T3 of the protected window as in the downlink example (technical features 1 to 4). For example, the base station 20 determines CG (an example of assignment of a radio resource) on the basis of the TSC assistance information, and transmits Configured-GrantConfig to the terminal device 10 to configure CG.

Furthermore, the RAN 20 may determine the configuration of CG or the assignment of DG according to 5G-AN PDB (T5) of 5QI of the TSC QoS flow assigned to the scheduled uplink data burst DB.

When CN-PDB (T2) is fixed or dynamically configured by the SMF 306, the RAN 20 acquires the configured CN-PDB from the SMF 306. In this case, the RAN 20 calculates 5G-AN PDB by subtracting CN-PDB from PDB of 5QI of the TSC QoS flow. Here, the RAN 20 may acquire the TSC assistance information including CN-PDB from the SMF 306.

Alternatively, the AF 308 may acquire information related to a packet delay budget (for example, T1, T2, or T5) in the uplink of the TSC QoS flow from 5GS via the NEF 302. The AF 308 generates information related to a traffic pattern of the uplink scheduled periodic data burst DB using the acquired information.

In this case, the AF 308 can set the third burst arrival time defined as a time as late as possible to reach the output interface of the UE 10. That is, the AF 308 can set the burst arrival time after grasping a time to arrive at the application server 40 using information related to the packet delay budget in the uplink.

In processing the TSC QoS flow, the functions/roles of the NW-TT 52 may be integrated as a function for processing a user plane (for example, one function of the UPF 330). Similarly, the functions/roles of the DS-TT 51 may be integrated as one function of the UE 10 which is a terminal device.

<<5. Other embodiments>>

The above-described embodiment is an example, and various modifications and applications are possible.

A control device that controls the information processing device 300, the base station 20, or the terminal device 10 of the present embodiment may be implemented by a dedicated computer system or a general-purpose computer system.

For example, a communication program for executing the above-described operation is stored in a computer-readable recording medium such as an optical disk, a semiconductor memory, a magnetic tape, or a flexible disk, and distributed. Then, for example, the program is installed in a computer, and the above-described processing is executed to configure the control device. At this time, the control device may be a device (for example, a personal computer) outside the information processing device 300, the base station 20, or the terminal device 10. In addition, the control device may be a device (for example, the control unit 33, the control unit 24, or the control unit 15) inside the information processing device 300, the base station 20, or the terminal device 10.

In addition, the communication program may be stored in a disk device included in a server device on a network such as the Internet such that the communication program can be, for example, downloaded to a computer. In addition, the above-described function may be implemented by cooperation of an operating system (OS) and application software. In this case, a portion other than the OS may be stored in a medium and distributed, or a portion other than the OS may be stored in a server device such that the portion other than the OS can be, for example, downloaded to a computer.

Among the processes described in the above embodiments, all or some of the processes described as being performed automatically can be performed manually, or all or some of the processes described as being performed manually can be performed automatically by a known method. In addition, the processing procedure, specific name, and information including various types of data and parameters illustrated in the above description and the drawings can be arbitrarily changed unless otherwise specified. For example, the various types of information illustrated in the drawings are not limited to the illustrated information.

In addition, each component of each device illustrated in the drawings is functionally conceptual, and does not necessarily need to be physically configured as illustrated in the drawings. That is, a specific form of distribution and integration of each device is not limited to the illustrated form, and the whole or a part thereof can be functionally or physically distributed and integrated in any unit according to various loads, usage conditions, and the like. Note that this configuration by distribution and integration may be performed dynamically.

In addition, the above-described embodiments can be appropriately combined in a region in which the processing contents do not contradict each other. In addition, the order of the steps illustrated in the sequence diagrams of the above-described embodiment can be appropriately changed.

In addition, for example, the present embodiment can be performed as any configuration constituting a device or a system, for example, a processor as a system large scale integration (LSI) or the like, a module using a plurality of processors or the like, a unit using a plurality of modules or the like, a set obtained by further adding other functions to a unit, or the like (that is, a configuration of a part of the device).

Note that, in the present embodiment, the system means a set of a plurality of components (devices, modules (parts), and the like), and it does not matter whether or not all the components are in the same housing. Therefore, a plurality of devices housed in separate housings and connected to each other via a network, and one device in which a plurality of modules is housed in one housing are both systems.

In addition, for example, the present embodiment can adopt a configuration of cloud computing in which one function is shared and processed by a plurality of devices in cooperation via a network.

<<6. Conclusion>>

Although the embodiments of the present disclosure have been described above, the technical scope of the present disclosure is not limited to the above-described embodiments as they are, and various modifications can be made without departing from the gist of the present disclosure. In addition, components of different embodiments and modifications may be appropriately combined with each other.

In addition, the effects of the embodiments described here are merely examples and are not limited, and other effects may be provided.

Note that the present technique can also have the following configurations:

(1) A base station comprising

a control unit that
determines assignment information of a radio resource regarding received data to be periodically received, and transmits the assignment information to a terminal device, wherein
the received data is specified by an arrival time, a periodicity, and a protected window of a data burst, and
the assignment information of the radio resource is determined on a basis of at least one of the arrival time, the periodicity, and the protected window.

(2) The base station according to (1), wherein the assignment information is SPS-Config.

(3) The base station according to (2), wherein the control unit receives the received data from an application device via UPF, and transmits the received data to the terminal device using the radio resource.

(4) The base station according to (1), wherein the assignment information is ConfiguredGrantConfig.

(5) The base station according to (4), wherein the control unit receives the received data from the terminal device using the radio resource and transmits the received data to an application device via UPF.

(6) The base station according to any one of (1) to (5), wherein
a period of the protected window is a period in which the received data is preferentially transferred using a queue assigned to the received data when transfer of the received data is controlled using the queues.

(7) The base station according to any one of (1) to (6), wherein the control unit assigns the radio resource after a period of the protected window elapses from an arrival time of the data burst.

(8) The base station according to any one of (1) to (6), wherein the control unit assigns the radio resource at and after an arrival time of the data burst without waiting for a lapse of a period of the protected window.

(9) The base station according to any one of (1) to (9), wherein

the control unit acquires information indicating Survival Time, and
a sum of a period of the protected window and a period in which the radio resource is assigned is shorter than the Survival Time.

(10) The base station according to any one of (1) to (9), wherein

the control unit acquires state information regarding a channel state with the terminal device,
specifies a modulation parameter to be used for transmission or reception of the received data,
acquires information regarding at least one of a QoS flow assigned for the transmission or the reception of the received data and a bandwidth, and
assigns the radio resources as many as necessary to transmit or receive the received data of a maximum data burst volume in the QoS flow using the modulation parameter.

(11) The base station according to (10), wherein when a data volume that can be transmitted or received using the specified modulation parameter is smaller than the maximum data burst volume, the control unit additionally assigns at least one of the radio resources, and notifies the terminal device of additional assignment information regarding the additional assignment of the radio resource using RRC signaling.

(12) The base station according to (10) or (11), in which when a data volume that can be transmitted or received using the specified modulation parameter is larger than the maximum data burst volume, the control unit deactivates assignment of at least one of the radio resources, and notifies the terminal device of deactivation information regarding the deactivation of the radio resource using control information of L1.

(13) The base station according to any one of (1) to (12), in which

the control unit acquires a packet delay budget of the data burst in an access network and an allowable threshold related to the packet delay budget,
sets assignment of the radio resources to a plurality of pieces of the received data or assignment of a first radio resource to first received data that is one of the plurality of pieces of received data using the packet delay budget and the allowable threshold, and
transmits an assignment result to the terminal device.

(14) The base station according to (13), in which when the packet delay budget is equal to or less than the allowable threshold or less than the allowable threshold, the control unit sets assignment of the radio resources to the plurality of pieces of received data.

(15) The base station according to (13) or (14), in which when the packet delay budget exceeds the allowable threshold or is equal to or more than the allowable threshold, the control unit sets assignment of the first radio resource to the first received data.

(16) The base station according to any one of (1) to (12), in which

the control unit detects a reception time for receiving a first packet of the data burst,
calculates a difference between the arrival time of the data burst and the reception time,
acquires a difference threshold for the difference,
sets assignment of the radio resources to a plurality of pieces of the received data or assignment of a first radio resource to first received data that is one of the plurality of pieces of received data using the difference and the difference threshold, and
transmits an assignment result to the terminal device.

(17) The base station according to (16), in which

the control unit transmits the difference to a session management device,
acquires an update delay budget obtained by updating the packet delay budget from the session management device after transmitting the difference,
sets assignment of the radio resources to a plurality of pieces of the received data or assignment of a first radio resource to first received data that is one of the plurality of pieces of received data using the update delay budget and the allowable threshold, and
transmits an assignment result to the terminal device.

(18) The base station according to any one of (1) to (17), in which

the control unit acquires PDU information related to configuration of a PDU set for the data burst, and
determines the assignment information related to assignment of the radio resources on the basis of priority levels of two or more types of data constituting the PDU set.

(19) The base station according to any one of (1) to (17), in which

the control unit
acquires PDU set information related to a plurality of PDU sets configured for the data burst, and
determines the assignment information related to assignment of the radio resources to data constituting the PDU sets on the basis of priority levels of the PDU sets.

(20) The base station according to (18) or (19), in which

the data burst is data constituting a group of picture (GOP), and
a type of the data constituting the PDU set is any one of a key frame, a P frame, and a B frame.

(21) The base station according to (18) or (19), in which

the data burst is 360 degree image data including a plurality of regions, and
a type of the data constituting the PDU set is either one region corresponding to a viewport or another region corresponding to the viewport.

(22) The base station according to any one of (1) to (21), in which

the control unit acquires a packet delay budget and a maximum data burst volume in an access unit for a QoS flow assigned for transmission of the received data,
determines whether or not the maximum data burst volume can be transmitted within the packet delay budget, and
when the maximum data burst volume cannot be transmitted within the packet delay budget, reports the fact to an external device.

(23) The base station according to (22), in which after reporting that the maximum data burst volume cannot be transmitted within the packet delay budget of a period in which the received data including a first video format is received, the control unit starts to receive the received data including a second video format.
(24) The base station according to (22) or (23), in which

after reporting that the maximum data burst volume cannot be transmitted within the packet delay budget of a period in which the received data including a first video format is received, the control unit acquires a second packet delay budget and a second maximum data burst volume in an access unit for a second QoS flow assigned for transmission of the received data, and
receives the received data including the second video format corresponding to the second QoS flow.

(25) The base station according to any one of (1) to (24), in which

the control unit acquires a burst sequential number assigned to the data burst,
acquires a PDU set or a PDU sequential number assigned to each PDU in the PDU set, the PDU sequential number being associated with the burst sequential number, and
assigns the radio resources in order to transmit a plurality of the PDUs in the PDU set corresponding to the PDU sequential number during a period of the protected window of the data burst corresponding to the burst sequential number.

(26) The base station according to (25), in which

when the PDU sequence number is a set sequential number assigned to the PDU set, an individual sequence number assigned to each PDU in the PDU set corresponding to the set sequential number is acquired, and the radio resources are assigned in order to transmit the PDU to which the individual sequential number is assigned in the PDU set corresponding to the set sequential number.

(27) The base station according to (26), in which the control unit assigns the radio resource to a first PDU earlier than the individual sequential number in preference to a second PDU later than the individual sequential number.
(28) The base station according to (27), in which the control unit assigns the radio resources such that retransmission of the first PDU is prioritized over retransmission of the second PDU.
(29) The base station according to any one of (26) to (28), in which the control unit discards a third PDU of the individual sequential number that cannot be transmitted within the period of the protected window of the data burst corresponding to the burst sequential number among a plurality of the PDUs.
(30) The base station according to any one of (26) to (29), in which

one GOP is assigned to the PDU set,
data of a key frame is assigned to the first PDU, and
data of a P frame or data of a B frame is assigned to the second PDU, and
data of the P frame or data of the B frame is assigned to the third PDU.

(31) The base station according to (25), in which
when the PDU sequential number is an individual PDU sequential number assigned to each PDU in the PDU set, the control unit assigns the radio resources in order to transmit the PDU to which the individual sequential number corresponding to the burst sequential number is assigned.
(32) The base station according to (31), in which

the control unit acquires PDU information related to configuration of the PDU set, and
assigns the radio resource to a first PDU earlier than the individual sequential number in preference to a second PDU later than the individual sequential number according to the PDU information.

(33) The base station according to (31) or (32), in which

the control unit acquires PDU information related to configuration of the PDU set,
discards a first PDU earlier than the individual sequential number according to the PDU information, and
assigns the radio resource in order to transmit a second PDU later than the individual sequential number.

(34) The base station according to any one of (31) to (33), in which

one GOP is assigned to the PDU set,
data of a key frame is assigned to the first PDU, and
data of a P frame or data of a B frame is assigned to the second PDU, and
data of the P frame or data of the B frame is assigned to the third PDU.

(35) A terminal device comprising

a control unit that receives assignment information of a radio resource regarding data to be periodically received or transmitted from a base station, wherein
the data is specified by an arrival time, a periodicity, and a protected window of a data burst, and
the assignment information of the radio resource is determined on a basis of at least one of the arrival time, the periodicity, and the protected window.

(36) The terminal device according to (35), in which

the control unit transmits a session establishment request for the data to be periodically received or transmitted to the base station, and
sets assignment of the radio resources for the data of the session according to the assignment information.

(37) The terminal device according to (36), in which the session establishment request includes identification information of a network slice for the data to be periodically received or transmitted.

(38) The terminal device according to any one of (35) to (37), in which the control unit acquires the assignment information via radio resource control (RRC).

(39) The terminal device according to any one of (35) to (38), in which assignment of the radio resources is set by Semi-Persistent Scheduling.

(40) The terminal device according to (39), in which the assignment information includes information regarding the number of continuous slots set by Semi-Persistent Scheduling.

(41) The terminal device according to (39), in which

the radio resource includes a plurality of discontinuous slots set by Semi-Persistent Scheduling, and
the assignment information includes information regarding a slot interval between the plurality of discontinuous slots and the number of the slots.

(42) The terminal device according to (39), in which

the radio resource includes a plurality of discontinuous slots set by Semi-Persistent Scheduling, and
the assignment information includes information regarding relative slot positions of the plurality of discontinuous slots from a head slot.

(43) The terminal device according to (39), in which

the radio resource includes a plurality of discontinuous slots set by Semi-Persistent Scheduling, and
the assignment information includes specific information for specifying one of a plurality of patterns of the plurality of discontinuous slots to be assigned within any period.

(44) The terminal device according to any one of (35) to (38), in which the assignment of the radio resources is Configured Grant.

(45) The terminal device according to (44), in which the assignment information includes information regarding the number of continuous slots or symbols configured by Configured Grant.

(46) The terminal device according to (44), in which

the radio resource includes a plurality of discontinuous slots or symbols configured by Configured Grant, and
the assignment information includes information regarding an interval between the plurality of discontinuous slots or symbols and the number of the slots or symbols.

(47) The terminal device according to (44), in which

the radio resource includes a plurality of discontinuous slots or symbols configured by Configured Grant, and
the assignment information includes information regarding relative positions of the plurality of discontinuous slots or symbols from a head.

(48) The terminal device according to (44), in which

the radio resource includes a plurality of discontinuous slots or symbols configured by Configured Grant, and
the assignment information includes specific information for specifying one of a plurality of patterns of the plurality of discontinuous slots or symbols to be assigned within any period.

(49) The terminal device according to any one of (35) to (48), in which the assignment information includes information regarding the configuration of the assignment of a plurality of the radio resources.

(50) The terminal device according to (49), in which the control unit activates at least one of assignments of the plurality of radio resources on the basis of received L1 signaling.

(51) The terminal device according to (49) or (50), in which the control unit deactivates at least one of assignments of the plurality of radio resources on the basis of received L1 signaling.

(52) An information processing device including

a control unit that

acquires, from a terminal device, a session establishment request for data that is specified by an arrival time, a periodicity, and a protected window of a data burst and that is periodically received or transmitted,

acquires first information relating to a first arrival time and a periodicity of the data burst,

configures a time slot assigned to each of a plurality of queues for priority control of traffic divided into the plurality of queues in transmission processing on a user plane,

assigns a first queue that is one of the plurality of queues to the data burst, and

transmits second information regarding the periodicity and a time slot assigned to the first queue to a base station that communicates with the terminal device.

(53) The information processing device according to (52), in which

the control unit acquires a policy corresponding to the session from a network function that manages a policy, and establishes the session including connection with an edge application server according to the policy.

(54) The information processing device according to (52) or (53), in which

the establishment request includes identification information for identifying a network slice to which the session belongs, and

the control unit starts processing of establishing the session including connection with an edge application server according to the identification information.

(55) The information processing device according to any one of (52) to (54), in which when receiving a notification that a packet delay budget of 5QI assigned to the data to be periodically received or transmitted cannot be satisfied, the control unit changes the established session to a second session including connection with an edge application server according to the notification.

(56) The information processing device according to (55), in which the control unit receives the notification from the base station.

(57) The information processing device according to any one of (52) to (54), in which

the control unit acquires a measurement result of QoS monitoring,

determines whether or not a packet delay budget of 5QI assigned to the data to be periodically received or transmitted is satisfied on the basis of the measurement result, and

changes the established session to a second session including connection with an edge application server when determining that the packet delay budget is not satisfied.

(58) The information processing device according to (52), in which

the control unit acquires a first packet delay budget of 5QI assigned to the data to be periodically received or transmitted,

sets a second packet delay budget in a core network, the second packet delay budget being shorter than the first packet delay budget,

sets a second arrival time obtained by adding the second packet delay budget to the arrival time, and

transmits arrival information regarding the second arrival time to the base station.

(59) The information processing device according to (58), in which

when receiving a notification that the first packet delay budget is not satisfied, the control unit updates the second packet delay budget to a third packet delay budget shorter than the first packet delay budget,

sets a third arrival time obtained by adding the third packet delay budget to the arrival time, and

transmits second arrival information regarding the third arrival time to the base station.

(60) The information processing device according to (58), in which

the control unit acquires a measurement result of QoS monitoring,

determines whether or not the first packet delay budget is satisfied on the basis of the measurement result,

when determining that the first packet delay budget is not satisfied, updates the second packet delay budget to a third packet delay budget shorter than the first packet delay budget,

sets a third arrival time obtained by adding the third packet delay budget to the arrival time, and

transmits second arrival information regarding the third arrival time to the base station.

(61) The information processing device according to any one of (58) to (60), in which

the control unit sets a fourth packet delay budget in an access network, the fourth packet delay budget being shorter than the first packet delay budget, and

transmits SPS instruction information instructing configuration of Semi-Persistent Scheduling (SPS) in the access network to the base station according to the fourth packet delay budget.

(62) The information processing device according to any one of (58) to (61), in which

the control unit sets a fourth packet delay budget in an access network, the fourth packet delay budget being shorter than the first packet delay budget, and

transmits CG instruction information instructing configuration of Configured Grant (CG) in the access network to the base station according to the fourth packet delay budget.

(63) The information processing device according to any one of (52) to (62), in which the control unit acquires PDU information related to configuration of a PDU set for the data burst.

(64) The information processing device according to any one of (52) to (62), in which the control unit acquires PDU set information related to a plurality of PDU sets configured for the data burst.

(65) The information processing device according to (63), in which

the PDU information is information for assigning one GOP to each data burst, and

the GOP includes one key frame and at least one P frame.

(66) The information processing device according to (64), in which

the PDU set information is information for assigning any one frame of one GOP to each PDU set of a plurality of the PDU sets, and

the GOP includes one key frame and at least one P frame.

(67) The information processing device according to (63) or (64), in which

the PDU information or the PDU set information is information for assigning each piece of image frame information constituting one GOP to each data burst, and

the GOP includes one key frame and at least one P frame.

(68) The information processing device according to any one of (65) to (67), in which the PDU information or the PDU set information includes information instructing to set a higher priority level to the key frame of the GOP than to the P frame.

(69) The information processing device according to (63) or (64), in which

the PDU information or the PDU set information is information for assigning data of a 360 degree image including a plurality of regions to each data burst, and

the plurality of regions includes one region corresponding to a viewport.

(70) The information processing device according to (63) or (64), in which

the PDU information or the PDU set information is information for assigning data of each region of a 360 degree image including a plurality of regions to each data burst, and

the plurality of regions includes one region corresponding to a viewport.

(71) The information processing device according to any one of (69) to (70), in which the PDU information or the PDU

## EP 4 665 046 A1

set information includes information instructing to set a higher priority level to the region corresponding to the viewport than to other regions.

(72) The information processing device according to (63), in which when synchronization of a plurality of pieces of data generated at an application level is necessary, the PDU information is information for assigning the plurality of pieces of data to data bursts, respectively.

(73) The information processing device according to (64), in which when synchronization of a plurality of pieces of data generated at an application level is necessary, the PDU set information is information for assigning the plurality of pieces of data to data bursts, respectively.

(74) The information processing device according to (72) or (73), in which the PDU information or the PDU set information includes information instructing to set a relative priority level between the plurality of pieces of data.

(75) The information processing device according to (73) or (74), in which

when the plurality of pieces of data includes first data transmitted through an uplink and second data received through a downlink, the PDU set information further includes a relative PDU set allowable period between a first PDU set that assigns the first data and a second PDU set that assigns the second data, and
the control unit sets arrival times of the first data burst to which the first PDU set is assigned and the second data burst to which the second PDU set is assigned on the basis of the PDU set allowable period.

(76) An information processing device including

a control unit that starts transmission of second data in a second video format having a data volume smaller than a data volume of first data when the first data is transmitted in a first video format and when a notification indicating that a maximum data burst volume cannot be transmitted within a packet delay budget in an access unit for a first QoS flow assigned for transmitting the first data is acquired from another device.

(77) The information processing device according to (76), in which the control unit acquires a second packet delay budget in the access unit for a second QoS flow assigned for transmitting the second data and a second maximum data burst volume.

(78) A communication system including an application server, a base station, and a terminal device, in which

the application server provides information related to an arrival time and a periodicity of a data burst to a network function of a core network,
the base station acquires information regarding the arrival time, the periodicity, and a protected window from the network function, and assigns radio resources to periodic received data specified by the arrival time, the periodicity, and the protected window, and
the terminal device acquires an assignment result of the radio resources from the base station.

Reference Signs List

1 COMMUNICATION SYSTEM
10 TERMINAL DEVICE
20 BASE STATION
11, 21 SIGNAL PROCESSING UNIT
12, 22, 32 STORAGE UNIT
13, 23 NETWORK COMMUNICATION UNIT
14 INPUT/OUTPUT UNIT
15, 24, 33 CONTROL UNIT
31 COMMUNICATION UNIT
40 APPLICATION SERVER
300 INFORMATION PROCESSING DEVICE

## Claims

1. A base station comprising

a control unit that
determines assignment information of a radio resource regarding received data to be periodically received, and

43

transmits the assignment information to a terminal device, wherein
the received data is specified by an arrival time, a periodicity, and a protected window of a data burst, and
the assignment information of the radio resource is determined on a basis of at least one of the arrival time, the
periodicity, and the protected window.

2. The base station according to claim 1, wherein the assignment information is SPS-Config.

3. The base station according to claim 2, wherein the control unit receives the received data from an application device
via UPF, and transmits the received data to the terminal device using the radio resource.

4. The base station according to claim 1, wherein the assignment information is ConfiguredGrantConfig.

5. The base station according to claim 4, wherein the control unit receives the received data from the terminal device
using the radio resource and transmits the received data to an application device via UPF.

6. The base station according to claim 1, wherein
a period of the protected window is a period in which the received data is preferentially transferred using a queue
assigned to the received data when transfer of the received data is controlled using the queues.

7. The base station according to claim 1, wherein the control unit assigns the radio resource after a period of the
protected window elapses from an arrival time of the data burst.

8. The base station according to claim 1, wherein the control unit assigns the radio resource at and after an arrival time of
the data burst without waiting for a lapse of a period of the protected window.

9. The base station according to claim 1, wherein

the control unit acquires information indicating Survival Time, and
a sum of a period of the protected window and a period in which the radio resource is assigned is shorter than the
Survival Time.

10. The base station according to claim 1, wherein

the control unit acquires state information regarding a channel state with the terminal device,
specifies a modulation parameter to be used for transmission or reception of the received data,
acquires information regarding at least one of a QoS flow assigned for the transmission or the reception of the
received data and a bandwidth, and
assigns the radio resources as many as necessary to transmit or receive the received data of a maximum data
burst volume in the QoS flow using the modulation parameter.

11. The base station according to claim 10, wherein when a data volume that can be transmitted or received using the
specified modulation parameter is smaller than the maximum data burst volume, the control unit additionally assigns
at least one of the radio resources, and notifies the terminal device of additional assignment information regarding the
additional assignment of the radio resource using RRC signaling.

12. A terminal device comprising

a control unit that receives assignment information of a radio resource regarding data to be periodically received
or transmitted from a base station, wherein
the data is specified by an arrival time, a periodicity, and a protected window of a data burst, and
the assignment information of the radio resource is determined on a basis of at least one of the arrival time, the
periodicity, and the protected window.

13. A communication method comprising:

determining assignment information of a radio resource regarding received data to be periodically received; and
transmitting the assignment information to a terminal device, wherein
the received data is specified by an arrival time, a periodicity, and a protected window of a data burst, and

the assignment information of the radio resource is determined on a basis of at least one of the arrival time, the periodicity, and the protected window.

**14.** A communication method comprising

receiving assignment information of a radio resource regarding data to be periodically received or transmitted from a base station, wherein
the data is specified by an arrival time, a periodicity, and a protected window of a data burst, and
the assignment information of the radio resource is determined on a basis of at least one of the arrival time, the periodicity, and the protected window.

FIG.1

EP 4 665 046 A1

# FIG.2

INFORMATION PROCESSING DEVICE — 300

| COMMUNI-CATION UNIT (31) | ↔ | CONTROL UNIT (33) | ↔ | STRAGE UNIT (32) |

# FIG.3

# FIG.4

**40**

## TERMINAL DEVICE

**41**

### SIGNAL PROCESSING UNIT

**413**

**411**

#### RECEPTION PROCESSING UNIT

| 411a | 411b | 411c | 411d |
|---|---|---|---|
| WIRELESS RECEP-TION UNIT | DEMUL-TIPLEXING UNIT | DEMOD-ULATION UNIT | DECODING UNIT |

**412**

#### TRANSMISSION PROCESSING UNIT

| 412d | 412c | 412b | 412a |
|---|---|---|---|
| WIRELESS TRANSMIS-SION UNIT | MUL-TIPLEXING UNIT | MOD-ULATION UNIT | ENCODING UNIT |

**42**

STORAGE UNIT

**45**

CONTROL UNIT

**44**

INPUT/OUTPUT UNIT

# FIG.5

# FIG.6

# FIG.7

EP 4 665 046 A1

# FIG.8

# FIG.9

| | Queue 7 | Queue 6 | Queue 5 | Queue 4 | Queue 3 | Queue 2 | Queue 1 | Queue 0 |
|------|---------|---------|---------|---------|---------|---------|---------|---------|
| TS01 | Pass | Block | Block | Pass | Block | Block | Pass | Block |
| TS02 | Block | Pass | Block | Block | Pass | Block | Block | Pass |
| TS03 | Pass | Block | Pass | Block | Pass | Block | Pass | Block |
| TS04 | Block | Pass | Block | Pass | Block | Pass | Block | Block |
| ⋮ | ⋮ | ⋮ | ⋮ | ⋮ | ⋮ | ⋮ | ⋮ | ⋮ |
| TSxx | Pass | Block | Block | Block | Pass | Block | Block | Pass |

EP 4 665 046 A1

# FIG.10

| TS1 | Queue 7 | |
|-----|---------|---|
| TS2 | Queue 6 | Tcycle |
| TS3 | Queue 3 | |
| TS4 | Queue 0 | |

# FIG.11

EP 4 665 046 A1

# FIG.12

Burst Arrival Time

Configured downlink assignment(s)

# FIG.13

PDU set

# FIG.14

PDU set #1                PDU set #2               PDU set #N

Data Burst #1            Data Burst #2          Data Burst #N

# FIG.15

PDU set #1

PDU #1                   PDU #2                  PDU #N

Data Burst #1            Data Burst #2          Data Burst #N

# FIG.16

```
                    ┌──────────────┐
                    │    START     │
                    └──────┬───────┘
                           │
                           ▼
      ┌───────────────────────────────────────────┐
      │        CONFIGURE SPS BASED                 │───S101
      │    ON MAXIMUM DATA BURST VOLUME            │
      └────────────────────┬──────────────────────┘
                           │
                           ▼
      ┌───────────────────────────────────────────┐
      │     SPECIFY CQI ON THE BASIS OF            │───S102
      │        RECEIVED CSI REPORT                 │
      └────────────────────┬──────────────────────┘
                           │
                           ▼
      ┌───────────────────────────────────────────┐
      │  SPECIFY Modulation Order AND Code Rate    │───S103
      └────────────────────┬──────────────────────┘
                           │
                           ▼
      ┌───────────────────────────────────────────┐
      │ CALCULATE DATA SIZE THAT CAN BE TRANSMITTED│───S104
      │          BY CURRENT SPS                    │
      └────────────────────┬──────────────────────┘
                           │
                           ▼
                                         S105
                   ◇──────────────────────◇
          YES    ╱  CALCULATED DATA SIZE OF SPS>= ╲
       ◄─────────   MAXIMUM DATA BURST VOLUME?    ╲
                   ◇──────────────────────◇
                           │ NO
                           ▼
      ┌───────────────────────────────────────────┐
      │        ADD SPS NECESSARY FOR               │───S106
      │    MAXIMUM DATA BURST VOLUME               │
      └────────────────────┬──────────────────────┘
                           │
                           ▼
                    ┌──────────────┐
                    │     END      │
                    └──────────────┘
```

# FIG.17

```
                    ┌──────────────┐
                    │    START     │
                    └──────┬───────┘
                           │
            ┌──────────────▼──────────────┐
            │   CONFIGURE PLURALITY OF    │
            │      SPSs ON BASIS OF       │──S901
            │  MAXIMUM DATA BURST VOLUME  │
            └──────────────┬──────────────┘
                           │
            ┌──────────────▼──────────────┐
            │   SPECIFY CQI ON THE BASIS OF│──S102
            │     RECEIVED CSI REPORT     │
            └──────────────┬──────────────┘
                           │
            ┌──────────────▼──────────────┐
            │SPECIFY Modulation Order AND Code Rate│──S103
            └──────────────┬──────────────┘
                           │
            ┌──────────────▼──────────────┐
            │  CALCULATE DATA SIZE THAT CAN BE │──S104
            │  TRANSMITTED BY CURRENT SPS  │
            └──────────────┬──────────────┘
```

S105

CALCULATED DATA SIZE OF SPS>= MAXIMUM DATA BURST VOLUME?

NO

S106

ADD SPS NECESSARY FOR MAXIMUM DATA BURST VOLUME

YES

S202

CAN MAXIMUM DATA BURST VOLUME BE SATISFIED EVEN WHEN ONE OR MORE SPSs ARE RELEASED?

NO

YES

SPECIFY RELEASABLE SPS ── S203

RELEASE SPECIFIED SPS ── S204

END

# FIG.18

Burst Arrival Time

T1+T2

T3

t0

State of buffer

D#12

D#1

D#11

Configured downlink assignment(s)

# FIG.19

Burst Arrival Time

T1+T2

T3

t0

State of buffer

D#3

D#1

D#2

Configured downlink assignment(s)

# FIG.20

```
                    ┌─────────────┐
                    │    START    │
                    └──────┬──────┘
                           │
            ┌──────────────▼──────────────┐
            │   ACQUIRE TSC ASSISTANCE     │── S301
            │        INFORMATION           │
            └──────────────┬──────────────┘
                           │
            ┌──────────────▼──────────────┐
            │  ACQUIRE PACKET DELAY BUDGET │── S302
            │       IN CORE NETWORK        │
            └──────────────┬──────────────┘
                           │
            ┌──────────────▼──────────────┐
            │   CALCULATE PACKET DELAY     │── S303
            │   BUDGET IN ACCESS NETWORK   │
            └──────────────┬──────────────┘
                           │
                           ▼         S304
                    ╱─────────────╲
                   ╱    PACKET      ╲          ┌──────────────────┐
                  ╱  DELAY BUDGET IN  ╲   NO   │   ASSIGN RADIO   │
                 ╲  ACCESS NETWORK<=  ╱───────▶│   RESOURCE BY    │── S306
                  ╲    THRESHOLD?    ╱         │DYNAMIC SCHEDULING│
                   ╲───────────────╱           └────────┬─────────┘
                           │YES                         │
            ┌──────────────▼──────────────┐             │
            │        CONFIGURE TSPS        │── S305      │
            └──────────────┬──────────────┘             │
                           │◀───────────────────────────┘
                    ┌──────▼──────┐
                    │     END     │
                    └─────────────┘
```

# FIG.21

```
                    ┌──────────────┐
                    │    START     │
                    └──────┬───────┘
                           │
                           ▼
          ┌────────────────────────────┐
          │   ACQUIRE TSC ASSISTANCE    │──S301
          │        INFORMATION          │
          └──────────────┬──────────────┘
                         │
                         ▼
          ┌────────────────────────────┐
          │  DETECT TIME AT WHICH FIRST │──S401
          │   PACKET OF DATA BURST IS   │
          │          RECEIVED           │
          └──────────────┬──────────────┘
                         │
                         ▼
          ┌────────────────────────────┐
          │  CALCULATE DIFFERENCE FROM  │──S402
          │  SECOND BURST ARRIVAL TIME  │
          └──────────────┬──────────────┘
                         │
                         ▼
                      S403
               ◇─────────────────◇
              /  DIFFERENCE        \        NO
             <  FROM SECOND BURST   >───────────────┐
              \  ARRIVAL TIME      /                │
               \    <0?          /                  │
                ◇───────────────◇                   │
                       │ YES                        │
                       ▼                            │
                    S405                            │
               ◇─────────────────◇                 │
              /    ABSOLUTE        \     NO          │
             <  VALUE OF DIFFERENCE>───────────────┤
              \     THRESHOLD?     /                 │
               ◇───────────────◇                    │
                       │ YES                         ▼
                       ▼                  ┌────────────────────┐
          ┌────────────────────────────┐ │   CONFIGURE SPS    │──S404
          │  ASSIGN RADIO RESOURCE BY   │ └─────────┬──────────┘
          │     DYNAMIC SCHEDULING      │──S406     │
          └──────────────┬──────────────┘           │
                         │◄─────────────────────────┘
                         ▼
                 ┌──────────────┐
                 │     END      │
                 └──────────────┘
```

# FIG.22

START

RECEIVE REPORT ON PACKET
DELAY BUDGET IN CORE
NETWORK — S501

IS PACKET
DELAY BUDGET IN
CORE NETWORK
SATISFIED? — S502

YES

NO

REDISTRIBUTE PACKET DELAY
BUDGET IN CORE NETWORK AND
PACKET DELAY BUDGET IN
ACCESS NETWORK — S503

IS PACKET
DELAY BUDGET IN
ACCESS NETWORK
SIGNIFICANT? — S504

NO

UPDATE GATE
CONTROL LIST — S507

YES

UPDATE BURST ARRIVAL TIME
USING UPDATED PACKET DELAY
BUDGET IN CORE NETWORK — S505

UPDATE TSC ASSISTANCE
INFORMATION — S506

END

# FIG.23

EP 4 665 046 A1

## INTERNATIONAL SEARCH REPORT

| International application No. |
| --- |
| **PCT/JP2024/003491** |

| A. | CLASSIFICATION OF SUBJECT MATTER |
| --- | --- |

*H04W 72/115*(2023.01)i; *H04W 56/00*(2009.01)i; *H04W 72/0446*(2023.01)i
FI:  H04W72/115; H04W72/0446; H04W56/00 130

According to International Patent Classification (IPC) or to both national classification and IPC

| B. | FIELDS SEARCHED |
| --- | --- |

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | NOKIA. NOKIA SHANGHAI BELL. RAN_BATFeedback_For_ AF_Adaptation. 3GPP TSG SA WG2#153E S2-2208561. 30 September 2022 section 5.27 | 1-6, 10, 12-14 |
| A | section 5.27 | 7-9, 11 |
| Y | US 2022/0104062 A1 (KABUSHIKI KAISHA TOSHIBA) 31 March 2022 (2022-03-31) paragraphs [0125]-[0126], [0129], [0134], [0144], [0148], [0150]-[0158], fig. 14 | 1-6, 10, 12-14 |
| Y | US 2020/0163083 A1 (NOKIA TECHNOLOGIES OY) 21 May 2020 (2020-05-21) paragraph [0037] | 2-3 |
| Y | WO 2022/002403 A1 (NOKIA TECHNOLOGIES OY) 06 January 2022 (2022-01-06) p. 12, lines 11-17 | 4-5 |

☐ Further documents are listed in the continuation of Box C.       ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 March 2024** | **09 April 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/003491**

| Patent document cited in search report | | | Publication date (day/month/year) | Patent family member(s) | Publication date (day/month/year) |
|---|---|---|---|---|---|
| US | 2022/0104062 | A1 | 31 March 2022 | (Family: none) | |
| US | 2020/0163083 | A1 | 21 May 2020 | WO 2018/210493 A1 paragraph [0037] | |
| WO | 2022/002403 | A1 | 06 January 2022 | (Family: none) | |

Form PCT/ISA/210 (patent family annex) (July 2022)

**EP 4 665 046 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021170790 A